(19) Europäisches Patentamt
European Patent Office
Office européen des brevets

(11) **EP 2 861 898 B1**

(12) **EUROPÄISCHE PATENTSCHRIFT**

(45) Veröffentlichungstag und Bekanntmachung des Hinweises auf die Patenterteilung:
**22.02.2017 Patentblatt 2017/08**

(21) Anmeldenummer: **12733414.2**

(22) Anmeldetag: **16.06.2012**

(51) Int Cl.:
**F16K 1/44** (2006.01)

(86) Internationale Anmeldenummer:
**PCT/EP2012/002556**

(87) Internationale Veröffentlichungsnummer:
**WO 2013/185790 (19.12.2013 Gazette 2013/51)**

(54) **SITZREINIGUNGSFÄHIGES DOPPELSITZVENTIL**

DOUBLE-SEAT VALVE WITH A SEAT-CLEANING FUNCTION

SOUPAPE À DOUBLE SIÈGE PERMETTANT UN NETTOYAGE DES SIÈGES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**22.04.2015 Patentblatt 2015/17**

(73) Patentinhaber: **GEA Tuchenhagen GmbH**
**21514 Büchen (DE)**

(72) Erfinder:
• **BURMESTER, Jens**
**23883 Grambek (DE)**
• **SÜDEL, Matthias**
**23626 Ratekau (DE)**
• **SCHULZ, Arne**
**22767 Hamburg (DE)**
• **TOLLE, Bastian**
**21514 Büchen (DE)**

(74) Vertreter: **Hauck Patentanwaltspartnerschaft mbB**
**Postfach 11 31 53**
**20431 Hamburg (DE)**

(56) Entgegenhaltungen:
WO-A1-2007/054134       WO-A1-2011/038738
WO-A1-2013/113341       DE-A1-102007 027 765
DE-A1-102007 038 124

**Beschreibung**

TECHNISCHES GEBIET

Die Erfindung betrifft ein sitzreinigungsfähiges Doppelsitzventil, das zwei seriell angeordnete, relativ zueinander bewegbare Schließglieder aufweist, die in der Schließstellung des Doppelsitzventils das Überströmen von Fluiden von einem Ventilgehäuseteil eines Ventilgehäuses in ein anderes verhindern, die sowohl in der Schließ- als auch in der Offenstellung einen Leckagehohlraum zwischen sich begrenzen, der mit der Umgebung des Doppelsitzventils über eine Ablaufbohrung, die von einem an dem ersten Schließglied ausgebildeten, aus dem Ventilgehäuse herausgeführten Rohrschaft berandet ist, verbunden ist, sowie mit weiteren Merkmalen nach dem Oberbegriff des Anspruchs 1.

STAND DER TECHNIK

Ein sitzreinigungsfähiges Doppelsitzventil der einleitend gekennzeichneten Gattung ist aus der WO 2007/054 131 A1 oder der WO 2007/054 134 A1 und der zur jeweiligen Patentfamilie gehörenden US 2009/0 008 594 A1 bzw. US 2009/0 044 874 A1 bekannt.

Bei dem Doppelsitzventil der erstgenannten Patentfamilie kommt das unabhängig angetriebene, bezogen auf eine senkrechte Normallage, untere Schließglied, im Folgenden als erstes Schließglied bezeichnet, im Zuge seiner Öffnungsbewegung an dem abhängig angetriebenen, oberen Schließglied, im Folgenden als zweites Schließglied bezeichnet, über eine zwischen den beiden Schließgliedern wirkende Mitteldichtung dichtend zur Anlage und überführt letzteres bei der weiteren Öffnungsbewegung gleichfalls in eine Offenstellung.

Bei dem Doppelsitzventil der zweitgenannten Patentfamilie besitzt das zweite Schließglied an seinem dem ersten Schließglied zugewandten Ende eine Ausnehmung mit einer zylindrischen Umfangswand, die mit einer dem ersten Schließglied zugeordneten zylindrischen ersten Sitzfläche fluchtet, wobei die Umfangswand der Ausnehmung so dimensioniert ist, um während der Öffnungsbewegung einen ersten Endabschnitt und eine radiale erste Dichtung des ersten Schließgliedes dichtend aufzunehmen, bevor das zweite Schließglied öffnet.

Bei dem Doppelsitzventil der jeweiligen Patentfamilie ist das erste Schließglied stets als Schieberkolben mit einer radial wirkenden ersten Dichtung ausgebildet. Das zweite Schließglied ist entweder als Schieberkolben mit einer radial wirkenden zweiten Dichtung oder als kegelförmiger Sitzteller mit einer axial/radial wirkenden oder als axialer Sitzteller mit einer axial wirkenden zweiten Dichtung ausgeführt.

Die bekannten Doppelsitzventile limitieren unter Anderem die Reinigungsmittelmenge bei der jeweiligen Sitzreinigung. Ihr Leckageauslass, der auch diese Reinigungsmittelmengen in die Umgebung des Doppelsitzventils abführen muss, ist im Regelfall so bemessen, dass er die Forderungen bzw. Bestimmungen der United States Food an Drug Administration der USA (USFDA) in den "3-A Sanitary Standards for Double-Seat Mixproof Valves, Number 85-02 [1]," erfüllt, die unter Anderem verlangen, dass der minimalste Durchtrittsquerschnitt des Leckageauslasses so zu bemessen ist, dass er mindestens dem Durchtrittsquerschnitt der größten an das Doppelsitzventil anschließbaren Rohrleitung entspricht (Forderung D14.2). Weiterhin werden im Zusammenhang mit der Sitzreinigung weitere Forderungen nach [1] erfüllt, die besagen, dass der jeweils geschlossene Sitzbereich von der jeweils generierten Sitzreinigungsströmung nicht direkt angeströmt oder druckerhöhend beaufschlagt wird (D14.5.2.1) und dass der Druck im dem Leckagehohlraum zugewandten geschlossenen Sitzbereich gleich oder kleiner dem Atmosphärendruck sein muss (D14.5.2.2).

Damit erfüllen die bekannten Doppelsitzventile auch weitere implizite Forderungen des vorg. Standards nach [1] , und zwar jene, dass bei größeren Dichtungsdefekten oder gar dem Verlust einer der beiden Sitzdichtungen im Zuge der Sitzreinigung des anderen Schließgliedes über den jeweiligen Dichtungsdefekt bzw. den Sitzbereich ohne Sitzdichtung kein Reinigungsmittel hindurchtreten darf. Unter diesen Bedingungen wird von den bekannten Doppelsitzventilen nicht nur die Forderung nach einer Begrenzung der Reinigungsmittelmenge und Vermeidung einer Direktbeaufschlagung der Sitzbereiche im Zuge der Sitzreinigung erfüllt, sondern auch die Forderung nach einer möglichst verwirbelungsfreien Abfuhr der Sitzreinigungsströmung zunächst in den Leckagehohlraum und von dort in die Umgebung, ohne dass der jeweils geschlossene Sitzbereich von dieser Sitzreinigungsströmung direkt angeströmt oder druckerhöhend beaufschlagt wird.

Unter Direktbeaufschlagung wird jede auf die den Sitzbereich begrenzenden Wandungen senkrecht gerichtete Geschwindigkeitskomponente aus der jeweiligen Sitzreinigungsströmung verstanden. Es hat sich nämlich gezeigt, dass jede diesbezügliche Direktbeaufschlagung zu einer Umwandlung kinetischer Strömungsenergie in statischen Druck führt. Abhängig von dem Auftreffwinkel der Strömung auf die angeströmte Wand- oder Körperfläche ergibt sich eine Verzweigungsströmung mit einer sog. "Verzweigungsstromlinie", wobei letztere die Strömung in zwei Hälften teilt. Die Verzweigungsstromlinie selbst läuft auf den sog. "Staupunkt" auf, sodass an dieser Stelle die Geschwindigkeit gleich Null ist. Der Druckzuwachs in Folge dieses Abstoppens der Geschwindigkeit erhält auch die Bezeichnung "Staudruck". Die vorstehend dargestellten druckerhöhenden Mechanismen generieren, falls sie wirksam werden, eine Leckageströmung über den jeweiligen Drosselspalt und die defekte oder die gänzlich nicht mehr vorhandene Sitzdichtung.

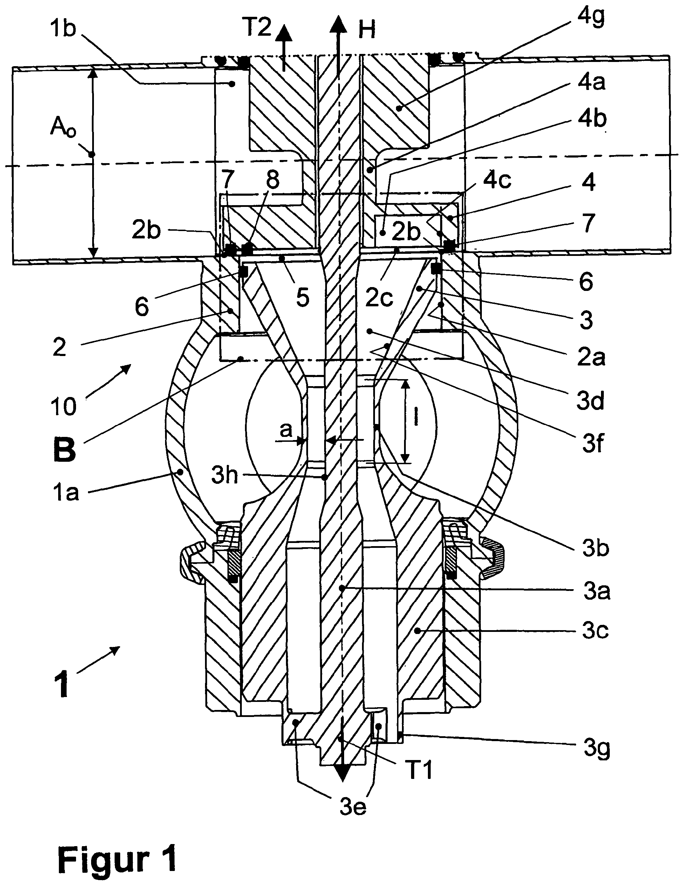

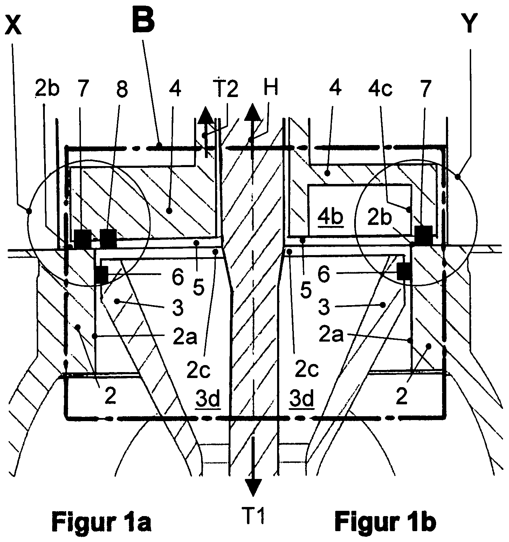

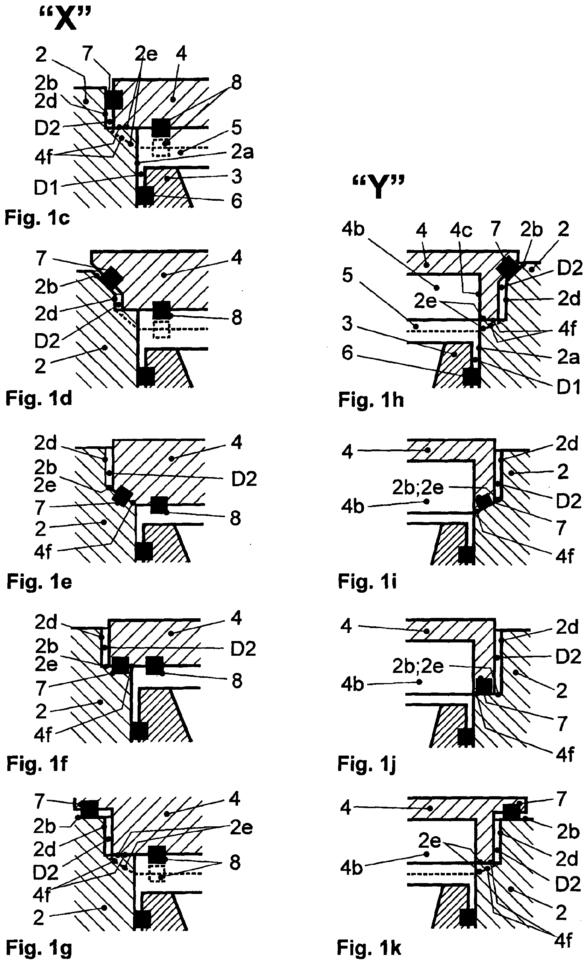

Während die Doppelsitzventile nach der WO 2007/054 131 A1 oder der WO 2007/054 134 A1 bzw. der US 2009/0 008 594 A1 oder der US 2009/0 044 874 A1 die Forderungen des Standards nach [1] allein mit strömungsmechanischen Mitteln und Wirkmechanismen an den den Leckagehohlraum begrenzenden Bauteilen des Doppelsitzventils lösen, schlägt die DE 10 2007 038 124 A1 oder die nachangemeldete US 2009/0 065 077 A1 vor, die besagten Forderungen des Standards nach [1] durch ein zwischen beiden Schließgliedern des Doppelsitzventils angeordnetes, zu beiden relativ bewegliches und separates drittes Glied, ein sog. Strömungsbarrierenelement, zu erfüllen. Dieses Strömungsbarrierenelement schattet bei Anlüften des einen Schließglieds und beim Beaufschlagen des Leckagehohlraums mit Reinigungsmedium das zumindest eine Dichtelement und/oder den Schließgliedsitz des anderen Schließglieds, das sich in seiner Schließstellung befindet, gegenüber einer Direktanströmung durch das in den Leckagehohlraum eintretende Reinigungsmedium ab. Unter "Abschatten" ist ausweislich der Beschreibung der vorg. Dokumente zu verstehen, dass das Dichtelement des jeweiligen sich in Schließstellung befindlichen Schließglieds nicht direkt und somit mit hoher Strömungsgeschwindigkeit von dem Reinigungsmedium beaufschlagt wird, wobei es zugelassen ist, dass das Reinigungsmedium im Wesentlichen drucklos und mit geringer Strömungsgeschwindigkeit in den Bereich des Schließgliedsitzes oder des Dichtelements des sich in Schließstellung befindlichen Schließglieds gelangt, so dass sich dort kein Staudruck aufbauen kann. Das Strömungsbarrierenelement muss ausweislich der Beschreibung nicht vollkommen dichtend gehäuseseitig anliegen; vielmehr ist es bevorzugt vom Gehäuse um einen kleinen Spalt beabstandet. Weiterhin entnimmt man den Figuren 1, 4 bis 7 und 12 bis 15 der DE 10 2007 038 124 A1 oder der US 2009/0 065 077 A1, dass der Leckageauslass die Forderung des Standards nach [1] gemäß D14.2 erfüllt, nämlich dass der minimalste Durchtrittsquerschnitt des Leckageauslasses mindestens dem Durchtrittsquerschnitt der größten an das Doppelsitzventil anschließbaren Rohrleitung entspricht.

In der WO 98/41 786 A1 (Seite 11, Zeile 24 bis Seite 12, Zeile 9) oder der zur Patentfamilie gehörenden US 6,178,986 B1 (Spalte 6, Zeile 58 bis Spalte 7, Zeile 11) ist bereits ein eigenständiges, gegenüber den beiden Schließgliedern eines sitzreinigungsfähigen Doppelsitzventils relativ bewegliches, in der zylindrischen Sitzfläche für das erste Schließglied gedichtet geführtes drittes Glied beschrieben, aber nicht beansprucht. Diese bekannte Ausführungsform unterscheidet sich von dem Gegenstand der nachveröffentlichten DE 10 2007 038 124 A1 oder der US 2009/0 065 077 A1 demnach im Wesentlichen durch die Wechselwirkung zwischen dem dritten Glied, dem Strömungsbarrierenelement, und der zugeordneten zylindrischen Sitzfläche für das erste Schließglied. Während die ältere Lösung hier eine Abdichtung mittels einer radial wirkenden Dichtung im Gleiteingriff vorsieht, muss bei der jüngeren Lösung das dritte Glied nicht vollkommen dichtend gehäuseseitig anliegen, sondern es ist bevorzugt vom Gehäuse um einen kleinen radialen Spalt beabstandet.

Ob das Strömungsbarrierenelement nach der DE 10 2007 038 124 A1 bzw. der US 2009/0 065 077 A1 durch seine "abschattende" Wirkung in seiner gehäuseseitig nicht zwingend gedichteten Ausführungsform oder in seiner gedichteten Ausführungsform nach der WO 98/41 786 A1 bzw. US 6,178,986 B1 die vorstehend genannte Forderung D14.5.2.1 und, bei entsprechender Dimensionierung des Leckageauslasses, auch die Forderung D14.2 nach [1] erfüllt, bleibt dahingestellt. Nicht erfüllt wird offensichtlich die Forderung D14.5.2.2, denn das Strömungsbarrierenelement tritt nunmehr innerhalb des in Rede stehenden sitzreinigungsfähigen Doppelsitzventils in einer signifikant modifizierten Ausführungsform in Erscheinung, wie dies die Firmendruckschrift Pentair Südmo Operating Instructions, BAA D 365it Complete PMO, Version 1.01, Double-seat valve type D 365it Complete PMO type D620 [2], veröffentlicht November 2011 (201111) unter der Internet-Adresse http://www.suedmo.de/resources/images/790, zeigt.

In der gegenüber der Firmendruckschrift [2] nachveröffentlichten DE 10 2010 046 137 A1 wird die erweiterte Funktion des bekannten, als Ringkörper ausgebildeten Strömungsbarrierenelements beschrieben. Der Ringkörper unterteilt in der Anlüftstellung zumindest eines der Schließglieder zusammen mit diesem den Leckageraum in einen ersten Leckageraumabschnitt und einen zweiten Leckageraumabschnitt. Der Ringkörper ist so ausgebildet, dass insbesondere in der jeweiligen Sitzreinigungsstellung generiertes Reinigungsmedium durch den Ringkörper hindurch vom ersten Leckageraumabschnitt in den zweiten Leckageraumabschnitt übertreten kann. Dieser Übertritt erfolgt derart, dass der Druck im zweiten Lageraumabschnitt gegenüber dem Druck im ersten Leckageraumabschnitt reduziert ist und das Reinigungsmedium von dem zweiten Leckageraumabschnitt zum Leckageauslauf gelangt. Der Ringkörper übernimmt somit neben der Funktion der Abschattung der Dichtung bzw. des Schließgliedsitzes des sich in seine Schließstellung befindlichen Schließgliedes zusätzlich auch die Funktion der Drosselung der jeweiligen Sitzreinigungsströmung. Diese Drosselung ist aber nur möglich und hinreichend, wenn der Ringkörper stets gehäuseseitig hinreichend gedichtet ist und jeweils am angelüfteten Schließglied in der notwendigen Weise dichtend anliegt.

Durch diese Ausgestaltung ist es möglich, wie dies beispielsweise die Seiten 14 und 25 der Firmendruckschrift [2] und Figur 1 der DE 10 2010 046 137 A1 mit Blick auf das erste Schließglied und den mit diesem verbundenen Rohrschaft verdeutlichen, den im Rohrschaft ausgebildeten Leckageauslass signifikant gegenüber dem Gegenstand der DE 10 2007 038 124 A1 oder der US 2009/0 065 077 A1 und damit abweichend von der Bestimmung D14.2 des Standards nach [1] zu reduzieren. Diese abweichende Auslegung des Doppelsitzventils wird möglich durch die Ausnahmebestimmung D14.2.1.1 des Standards nach [1] , die besagt, dass ein gegenüber D14.2 reduzierter Leckageauslass dann zulässig ist, wenn mit dem abweichend ausgelegten Doppelsitzventil Daten zur Verfügung gestellt werden, die beweisen, dass der maximale Druck zwischen den Ventilsitzen des Doppelsitzventils kleiner oder gleich dem maximalen Druck in einer mit einem unreduzierten Leckageauslass versehenen Verbindungsleitung zwischen einem Absperrventil und einem Wechselventil einer Vergleichsanordnung ist, die in den Standards nach [1] mit "Block and Bleed" Anordnung bezeichnet ist.

Das Doppelsitzventil gemäß der Firmendruckschrift [2] oder der DE 10 2010 046 137 A1 hat den bemerkenswerten Vorteil, dass das Ventilgehäuse um ein bis zwei Nennweiten kleiner gegenüber der Ausführung mit einem nicht im Querschnitt reduzierten Leckageauslass und damit deutlich kostengünstiger ausgeführt werden kann, weil in der Offenstellung des Doppelsitzventil, in der der Rohrschaft die Verbindungsöffnung zwischen den Ventilgehäuseteilen durchsetzt, der Durchtrittsquerschnitt des Ringspaltes zwischen Rohrschaft und Verbindungsöffnung, der dem Durchtrittsquerschnitt der größten an das Ventilgehäuse anschließbaren Rohrleitung entsprechen muss, ohne die vorstehende Nennweitenvergrößerung realisiert werden kann.

Das Doppelsitzventil gemäß der Firmendruckschrift [2] oder der DE 10 2010 046 137 A1 hat allerdings den großen Nachteil, dass zum Einen das dritte Glied in Form eines gehäuseseitig gedichteten Strömungsbarrierenelements in Verbindung mit den weiteren Merkmalen seiner Anordnung im Leckagehohlraum und Einbindung in die Schließgliedkonfiguration einen komplizierten und damit störanfälligen konstruktiven Aufbau des Doppelsitzventils bedingt. Zum Anderen ist dieses zusätzliche Einbauteil im Leckagehohlraum mit zusätzlich notwendigen Dichtungsmitteln, Ecken und Toträumen grundsätzlich schwer im Durchfluss zu reinigen und damit unter hygienischen Gesichtspunkten im bestimmungsgemäßen Anwendungsbereich bedenklich. Eine hinreichende Drosselung der jeweiligen Sitzreinigungsströmung ist darüber hinaus nur dann sichergestellt, wenn diese Sitzreinigungsströmung die planmäßig vorgesehenen Drosselstellen im Strömungsbarrierenelement passiert und nicht im Bypass in der formschlüssigen Verbindung zwischen letzterem und dem in seiner Sitzreinigungsstellung befindlichen Schließglied mehr oder weniger ungedrosselt vorbeigeführt wird.

Die Fachwelt sucht daher nach einer Lösung, wie ohne zusätzliche Einbauteile im Leckagehohlraum eines sitzreinigungsfähigen Doppelsitzventils der einleitend gekennzeichneten Gattung, und zwar mit rein strömungsmechanischen Mitteln und Wirkmechanismen an den den Leckagehohlraum begrenzenden, bislang vorhandenen Bauteilen, die Ausnahmebestimmung D14.2.1.1 und die Bestimmung D14.5.2.2 des Standards nach [1] zu realisieren ist.

Es ist Aufgabe der vorliegenden Erfindung, ein sitzreinigungsfähiges Doppelsitzventil der gattungsgemäßen Art derart weiterzuentwickeln, dass dieses auch unter der Bedingung, dass die Querschnittsfläche der Ablaufbohrung kleiner als die der größten an das Doppelsitzventil anschließbaren Rohrleitung ist, eine möglichst verwirbelungsfreie Ableitung der Sitzreinigungsströmung in den und aus dem Leckagehohlraum sicherstellt und eine druckerhöhende Direktbeaufschlagung der Sitzbereiche sicher vermeidet.

ZUSAMMENFASSUNG DER ERFINDUNG

Die Aufgabe wird durch ein sitzreinigungsfähiges Doppelsitzventils mit den Merkmalen des Anspruchs 1 gelöst. Vorteilhafte Ausgestaltungen sind in den Unteransprüchen beschrieben.

Das erfindungsgemäße sitzreinigungsfähige Doppelsitzventil basiert auf einer grundsätzlichen ersten Schließgliedkonfiguration, wie sie das bekannte Doppelsitzventil gemäß WO 2007/054 131 A1 aufweist. Bei diesem bekannten Doppelsitzventil ist am jeweiligen Schließglied, bezogen auf die zugeordnete Dichtung, stets leckagehohlraumseitig ein zylindrischer Ansatz zur Bildung des jeweiligen Drosselspaltes angeordnet. Die vorliegende Erfindung verzichtet auf diese Einschränkung und lässt auch eine Anordnung des jeweiligen Drosselspaltes auf der dem Leckagehohlraum abgewandten Seite der Dichtung zu. Darüber hinaus verwendet die vorliegende Erfindung den halben Durchmesserunterschied dieser zylindrischen Ansätze, der die Ausbildung einer Übergangsfläche zwischen den durchmesserunterschiedlichen Abschnitten einer die Ventilgehäuseteile eines Ventilgehäuses miteinander verbindenden Verbindungsöffnung erlaubt, wobei die Abschnitte den zylindrischen Ansätzen zugeordnet sind. Weiterhin sind die Schließglieder unabhängig voneinander durch einen Teilhub jeweils spaltweit in eine Sitzreinigungsstellung zwecks Spülung ihrer Sitzflächen überführbar. Eine in der jeweiligen Sitzreinigungsstellung generierte Sitzreinigungsströmung erfährt in dem am zugeordneten Schließglied angeordneten Drosselspalt die erforderliche Drosselung, bevor sie in den zwischen den Schließgliedern angeordneten Leckagehohlraum eintritt. Schließlich erfährt bei dem bekannten Doppelsitzventil die durch das erste Schließglied generierte erste Sitzreinigungsströmung an einer rotationssymmetrischen Umlenkfläche, die in einer Ausnehmung im zweiten Schließglied ausgebildet ist, eine stoßfreie, in eine Ablaufbohrung gerichtete Umlenkung, wobei die Ablaufbohrung von einem an dem ersten Schließglied ausgebildeten, aus dem Ventilgehäuse herausgeführten Rohrschaft berandet ist.

In der vorliegenden Erfindung wird die Ausführungsform des sitzreinigungsfähigen Doppelsitzventils der WO 2007/054 131 A1 weiterentwickelt.

Das erfindungsgemäße sitzreinigungsfähige Doppelsitzventil zeichnet sich durch folgende, an sich bekannte Merkmale aus:

- es weist zwei seriell angeordnete, relativ zueinander bewegbare Schließglieder auf, die in der Schließstellung des Doppelsitzventils das Überströmen von Fluiden von einem Ventilgehäuseteil eines Ventilgehäuses in ein anderes verhindern und die sowohl in der Schließ- als auch in der Offenstellung einen Leckagehohlraum zwischen sich begrenzen, der mit der Umgebung des Doppelsitzventils über eine Ablaufbohrung, die von einem an dem ersten Schließglied ausgebildeten, aus dem Ventilgehäuse herausgeführten Rohrschaft berandet ist, verbunden ist;
- in der Schließstellung findet das als Schieberkolben ausgebildete erste Schließglied in einer die Ventilgehäuseteile miteinander verbindenden, eine zylindrische erste Sitzfläche ausbildenden Verbindungsöffnung dichtend Aufnahme und im Zuge seiner Öffnungsbewegung kommt das erste Schließglied an einem oder in einem zweiten Schließglied, das einer zweiten Sitzfläche zugeordnet ist, dichtend zur Anlage und überführt letzteres bei der weiteren Öffnungsbewegung gleichfalls in eine Offenstellung;
- die Schließglieder sind unabhängig voneinander durch einen Teilhub jeweils spaltweit in eine Sitzreinigungsstellung zwecks Spülung ihrer Sitzflächen überführbar;
- das zweite Schließglied ist durch einen der Öffnungsbewegung gleichgerichteten zweiten Teilhub und das erste Schließglied ist durch einen der Öffnungsbewegung entgegengerichteten ersten Teilhub in seine jeweilige Sitzreinigungsstellung überführbar;
- das erste Schließglied weist an seinem ersten Endabschnitt eine erste Dichtung auf, die radial gegenüber der zylindrischen ersten Sitzfläche abdichtet;
- das zweite Schließglied besitzt an seinem dem ersten Schließglied zugewandten zweiten Endabschnitt eine rotationssymmetrische Ausnehmung, die sich in der Schließstellung des Doppelsitzventils radial außenseitig durchmesserbündig an die zylindrische erste Sitzfläche anschließt;
- die Ausnehmung ist wenigstens abschnittsweise von einer Umlenkfläche begrenzt, deren Kontur, im Meridianschnitt gesehen, einen knickfreien Verlauf aufweist;
- das radial außenseitige Ende der Umlenkfläche mündet unmittelbar oder mittelbar in der stirnseitigen Begrenzungsfläche des zweiten Endabschnitts aus;
- jeder Endabschnitt bildet in der zugeordneten Sitzreinigungsstellung radial außenseitig mit der zugeordneten Verbindungsöffnung einen ringförmigen Drosselspalt;
- die erste Sitzfläche weist einen Durchmesser auf, der kleiner ist als der Durchmesser einer dem zweiten Schließglied zugeordneten ringförmigen Ausnehmung in der Verbindungsöffnung und zwischen der ersten Sitzfläche und der ringförmigen Ausnehmung ist eine Übergangsfläche vorgesehen;
- das zweite Schließglied liegt in seiner Schließstellung mit einer an einer Stirnfläche seines zweiten Endabschnitts angeordneten Anschlagfläche an der Übergangsfläche an, und zwar unmittelbar an die erste Sitzfläche angrenzend.

Das erfindungsgemäße sitzreinigungsfähige Doppelsitzventil ist in der vorstehend genannten grundsätzlichen ersten Schließgliedkonfiguration gemäß WO 2007/054 131 A1 realisierbar.

Zur Lösung der der Erfindung zugrunde liegenden Aufgabe besteht der erfinderische Grundgedanke darin, dass die erste Sitzreinigungsströmung durch die Umlenkfläche radial nach innen und axial zum ersten Schließglied hin bis zum Verlassen des zweiten Schließgliedes an einem außerhalb der Ausnehmung befindlichen stirn- und radial innenseitigen Ende des zweiten Schließgliedes zwangsweise geführt ist. Dies gelingt dadurch, dass die Umlenkfläche mit einem ihrem radial außenseitigen Ende abgewandten Erstreckungsbereich den restlichen Bereich der Ausnehmung in Gänze berandet und an einem dem ersten Schließglied zugewandten stirn- und radial innenseitigen Ende des zweiten Schließgliedes aus letzterem derart ausmündet, dass das stirn- und radial innenseitige Ende des zweiten Schließgliedes, in der Längsachse des Doppelsitzventils gesehen, über den gedachten Raum, der durch eine durch die Anschlagfläche hindurchgehende Ebene stirnseitig begrenzt ist, hinausragt, und dass das erste Schließglied im Zuge seiner Öffnungsbewegung am zweiten Schließglied über eine zwischen den Schließgliedern wirkende Mitteldichtung dichtend zur Anlage kommt.

Durch diese Ausgestaltung wird die zwangsweise Führung der ersten Sitzreinigungsströmung bis in den Eintritt der Ablaufbohrung hinein aufrechterhalten. Diese besonders lange und noch weitreichendere Umlenkung und zwangsweise Führung der ersten Sitzreinigungsströmung führt zu einer noch weiter verbesserten Erfüllung der Forderungen des Standards nach [1] . Darüber hinaus erfährt durch diese Behandlung der ersten Sitzreinigungsströmung, im Unterschied zu dem gattungsbildenden Doppelsitzventil, auch die zweite Sitzreinigungsströmung erstmals auch eine in die Ablaufbohrung gerichtete Umlenkung. Wird die erste Sitzreinigungsströmung noch weiter in die Ablaufbohrung hinein umgelenkt und zwangsweise geführt, dann erfährt auch die zweite Sitzreinigungsströmung neben der vorstehenden Umlenkung zusätzlich eine zwangsweise Führung bis in den Eintritt der Ablaufbohrung hinein.

Die erste Sitzreinigungsströmung, deren Behandlung im Leckagehohlraum von vornherein schwieriger und problematischer als jene der zweiten Sitzreinigungsströmung ist, wird nunmehr sehr weit radial nach innen und gleichzeitig axial zum ersten Schließglied hin umgelenkt und zwangsweise geführt, und sie mündet nicht mehr aus einer Stirnfläche der Ausnehmung im zweiten Schließglied aus, sondern aus einer außerhalb der Ausnehmung befindlichen Stirnfläche des zweiten Schließglieds selbst aus. Dabei ist es vorteilhaft, wenn die Umlenkung und zwangsweise Führung radial und axial sehr weitreichend erfolgt, und zwar bis zu einem äußersten, das zweite Schließglied begrenzenden Ende. Bei den beiden vorstehend genannten, bekannten Doppelsitzventilen wird die erste Sitzreinigungsströmung nur bis zur Ausmündung der Umlenkfläche aus der Stirnfläche der Ausnehmung im zweiten Schließglied, d.h. auf relativ kurzem Strömungsweg, umgelenkt und zwangsweise geführt.

Die mit dem erfindungsgemäßen sitzreinigungsfähigen Doppelsitzventil durchführbare Behandlung der ersten Sitzreinigungsströmung hat in Verbindung mit ihrer hinreichenden Drosselung die überraschende Wirkung, dass die der Erfindung zugrundeliegende Aufgabe, insbesondere unter den Bedingungen eines reduzierten Leckageauslasses, in vollem Umfang gelöst wird. Ein Aufstauen der ersten Sitzreinigungsströmung im Leckageauslass, der durch die Abfolge mehrerer Abschnitte einer Ablaufbohrung im Rohrschaft ausgebildet sein kann, findet in keinem dieser Abschnitte statt; vielmehr ist der jeweilige Durchflussquerschnitt der Ablaufbohrung an keiner Stelle vollständig ausgefüllt, sodass der Atmosphärendruck bis in den Leckagehohlraum durchgreifen kann. Eine unzulässige Überdruckbildung gegenüber dem Atmosphärendruck kann daher im Leckagehohlraum nicht stattfinden. Das Gleiche gilt für die zweite Sitzreinigungsströmung, die von vornherein durch ihre im Leckagehohlraum noch wirksamere Ejektorwirkung einfacher als die erste Sitzreinigungsströmung zu handhaben ist.

Das erfindungsgemäße sitzreinigungsfähige Doppelsitzventil kann die anmeldungsgemäße Aufgabenstellung erst recht bei einem bekannten Doppelsitzventil der vorbeschriebenen Art lösen, bei dem der Leckageauslass nicht gegenüber dem Durchtrittsquerschnitt der größten an das Doppelsitzventil anschließbaren Rohrleitung reduziert ist.

Da die Endlagenbegrenzung des zweiten Schließgliedes an der Anschlagfläche im Bereich der Übergangsfläche erfolgt und somit die bislang im Stand der Technik notwendige feste (metallische) Anschlagfläche im Sitzbereich des zweiten Schließgliedes oder anderswo entfällt, ergeben sich nunmehr in diesem Sitzbereich gegenüber bekannten Lösungen mehr Freiheitsgrade für die Ausgestaltung der Dichtungsgeometrie des zweiten Schließgliedes und der diesbezüglichen Wirkmechanismen. Prinzipiell kann in diesem Bereich eine rein radial, radial/axial und auch eine rein axial wirkende zweite Dichtungen vorgesehen werden.

In diesem Zusammenhang sieht die Erfindung gemäß einer ersten Ausgestaltung vor, dass die zweite Sitzfläche zylindrisch ausgeführt und durch die ringförmige gebildet ist, und dass das zweite Schließglied eine zweite Dichtung aufweist, die radial gegenüber der zweiten Sitzfläche im Gleiteingriff abdichtet.

Eine die zweite Sitzfläche betreffende zweite Ausgestaltung sieht vor, dass die zweite Sitzfläche kegelförmig ausgeführt und durch die Übergangsfläche oder durch eine sich gegenüber der Übergangsfläche andererseits, d.h. bei senkrechter Normallage nach oben an die ringförmige Ausnehmung anschließende Fläche gebildet ist, und dass das zweite Schließglied eine zweite Dichtung aufweist, die axial/radial gegenüber der zweiten Sitzfläche im Gleit-/Druckeingriff abdichtet.

Gemäß einer dritten Ausgestaltung wird vorgeschlagen, dass die zweite Sitzfläche senkrecht zur Längsachse des Doppelsitzventils angeordnet und durch die Übergangsfläche oder durch eine sich gegenüber der Übergangsfläche andererseits, d.h. bei senkrechter Normallage nach oben an die ringförmige Ausnehmung anschließende Fläche gebildet ist, und dass das zweite Schließglied eine zweite Dichtung aufweist, die axial gegenüber der zweiten Sitzfläche im Druckeingriff abdichtet.

Die beiden letztgenannten Lösungen mit den Vorteilen einer axial/radial oder einer rein axial wirkenden Dichtung und eines entsprechend ausgebildeten Sitztellers sind allerdings nur dann möglich, wenn die jeweilige Dichtung derart duktil beschaffen ist, dass die feste und ggf. metallische Anlage des zweiten Schließgliedes mit seiner Anschlagfläche allein an der Übergangsfläche unter allen Bedingungen sichergestellt ist.

Das erfindungsgemäße sitzreinigungsfähige Doppelsitzventil stellt in einer bevorzugten Ausführungsform sicher, dass die Ventilgehäuseteile entsprechend dem größten Nenndurchtrittsquerschnitt einer an letztere anschließbaren Rohrleitung ausgeführt und über einen die Verbindungsöffnung innenseits ausbildenden Sitzring miteinander verbunden sind. Ein Verbindungsteil des Rohrschaftes, das einen Abschnitt der Ablaufbohrung innenseitig ausbildet, durchdringt beim vollen Öffnungshub des Doppelsitzventils mindestens die Verbindungsöffnung und ist dort radial außenseitig derart bemessen, dass die Verbindungsöffnung an ihrer engsten Stelle einen Ringraum mit einem Ringraum-Durchtrittsquerschnitt ausbildet, der mindestens dem vorg. größten Nenndurchtrittsquerschnitt entspricht. Durch diese Bemessungsvorschrift ist zwingend sichergestellt, dass der Ringraum-Durchtrittsquerschnitt an keiner Stelle eine Verengung gegenüber dem Nenndurchtrittsquerschnitt der anschließbaren Rohrleitung bildet. Da die Ventilgehäuseteile in ihrer Nennweite durch die anzuschließende Rohrleitung determiniert und damit nicht von vornherein um ein bis zwei Nennweiten überdimensioniert sind, ist der Außendurchmesser des Verbindungsteils und damit der radial innenseitige Abschnitt der Ablaufbohrung derart zu bemessen und zu reduzieren, dass der Ringraum-Durchtrittsquerschnitt in der erforderlichen Größe realisiert ist.

In vorteilhafter Weise ist der Verbindungsteil, der mit seiner querschnittsreduzierenden und damit einen an sich unerwünschten Strömungswiderstand erzeugenden Wirkung auf das gerade notwendige Längenmaß beschränkt bleibt, derart ausgebildet, dass sich die Ablaufbohrung vom leckagehohlraumseitigen Ende des ersten Schließgliedes in einem Einlauftrichter konusförmig und stetig bis zum Verbindungsteil verjüngt und in letzterem auf einer begrenzten Länge einen minimalen, vorzugsweise unveränderten Ablaufquerschnitt aufweist.

Zur Verringerung des Strömungswiderstandes der Ablaufbohrung ist diese, entsprechend einem weiteren Vorschlag, im Anschluss an den Verbindungsteil in einem als erster Druckausgleichskolben ausgebildeten Abschnitt des Rohrschaftes erweitert, wobei der Druckausgleichskolben einen dem Durchmesser der zylindrischen ersten Sitzfläche entsprechenden oder von diesem sich geringfügig nach beiden Seiten unterscheidenden Außendurchmesser aufweist.

Zur Vermeidung eines unplanmäßigen Aufstauens der Sitzreinigungsströmungen vor dem engsten Durchtrittsquerschnitt der Ablaufbohrung, dem Verbindungsteil, ist vorgesehen, dass der Einlauftrichter mit einem sich in ihm ggf. aufstauenden Volumen an Flüssigkeit eine Füllhöhe ausbildet, deren hydrostatischer Druck ausreicht, um den in der jeweiligen Sitzreinigungsstellung generierten Volumenstrom an Flüssigkeit mindestens durch den minimalen Ablaufquerschnitt des Verbindungsteils, das sich, in Schwerkraftrichtung gesehen, an die Füllhöhe anschließt, hindurchzufördern.

Bei sitzreinigungsfähigen Doppelsitzventilen der bekannten Art mit unproblematisch groß dimensioniertem Durchtrittsquerschnitt der Ablaufbohrung ist eine hinreichende Drosselung der Sitzreinigungsströmungen, in welcher Art auch immer, erforderlich und bekannt. Eine hinreichende Drosselung ist bei dem erfindungsgemäßen sitzreinigungsfähigen Doppelsitzventil mit wenigstens abschnittsweise deutlich reduziertem Durchtrittsquerschnitt der Ablaufbohrung erst recht zwingend und bedarf besonderer und nicht notorischer Maßnahmen. Damit der vorstehend beschriebene unplanmäßige Fall eines Aufstauens der Sitzreinigungsströmungen im engsten Durchtrittsquerschnitt der Ablaufbohrung nicht eintreten kann, sind die durch die Sitzreinigungsströmungen generierten jeweiligen Volumenströme an Flüssigkeit derart gedrosselt, dass die Volumenströme ohne Rückstau in der Ablaufbohrung durch letztere in die Umgebung des Doppelsitzventils ablaufen.

Unterschiedliche Beanspruchungen der Dichtungen der beiden Schließglieder und unterschiedliche Lagerungs- und Führungsbedingungen der Schließglieder erlauben es, wie dies ein Vorschlag vorsieht, dass eine radiale zweite Spaltweite des zweiten Drosselspaltes kleiner als eine radiale erste Spaltweite des ersten Drosselspaltes ausgeführt ist. Dies wirkt sich insofern auf die größenmäßige Abstimmung der durch die Drosselspalte generierten Volumenströme günstig aus, als am zweiten Drosselspalt konstruktiv eine geringere Spaltlänge zur Verfügung steht als am ersten Drosselspalt, wobei bekanntermaßen die Spaltlänge nur linear und die radiale Spaltweite exponentiell die Drosselung beeinflusst. Es hat sich als vorteilhaft und zielführend erwiesen, wenn sich die relativen radialen Spaltweiten des ersten und des zweiten Drosselspaltes annähernd wie 2 :1 verhalten, wobei unter relativer radialer Spaltweite das Verhältnis zwischen absoluter radialer Spaltweite und dem mittleren Durchmesser, auf dem der Drosselspalt angeordnet ist, zu verstehen ist.

Im Hinblick auf gleiche Ablaufbedingungen der Sitzreinigungsströmungen in der Ablaufbohrung ist es von Vorteil, wenn die ringförmigen Drosselspalte mit ihrer radialen Spaltweite und einer zugeordneten Länge so ausgelegt sind, dass die in den jeweiligen Sitzreinigungsstellungen mit den Teilhüben durch die zugeordneten Sitzreinigungsströmungen generierten Volumenströme an Flüssigkeit gleich sind.

Der Volumenstrom an Flüssigkeit der jeweiligen Sitzreinigungsströmung wird durch die vorstehend vorgeschlagenen Maßnahmen derart gedrosselt und/oder umgelenkt und geführt, dass infolge der Ejektorwirkung der jeweiligen Sitzreinigungsströmung der Druck an dem leckagehohlraumseitigen Abschnitt der Sitzfläche des jeweils in seiner Schließstellung verbleibenden, anderen Schließgliedes gleich oder kleiner dem Umgebungsdruck des Doppelsitzventil, dem Atmosphärendruck, ist. Mit Ausnahme der Gleichheit der in Rede stehenden Drücke bedeutet dies, dass der jeweils geschlossene Ventilsitz besaugt wird, sodass ein Übertritt von Reinigungsflüssigkeit in das Produkt selbst bei grob beschädigter oder gänzlich fehlender Sitzdichtung ausgeschlossen ist. Dabei ist der Volumenstrom der ersten Sitzreinigungsströmung die limitierende Größe für die vorgeschlagene Drosselung, da die erste Sitzreinigungsströmung die problematischste und am schwierigsten zu handhabende ist. Dies resultiert aus dem nicht zu ändernden Sachverhalt, dass die erste Sitzreinigungsströmung den Auflagespalt zwischen dem in seiner Schließlage befindlichen zweiten Schließglied und einer zugeordneten Anschlagfläche am Ventilgehäuse unmittelbar und quer zum Auflagespalt überströmt, sodass sich in diesem Bereich der an sich Unterdruck erzeugenden Ejektorwirkung der ersten Sitzreinigungsströmung ein Überdruck erzeugender Staudruck überlagern kann. Die Unterdruck erzeugende Ejektorwirkung der zweiten Sitzreinigungsströmung ist hingegen weitgehend frei von staudruckbildenden Überlagerungen.

Bei der Strömungsführung der durch Anlüften des zweiten Schließgliedes generierten zweiten Sitzreinigungsströmung ist wesentlich, dass diese an einer durch die Übergangsfläche und die erste Sitzfläche gebildeten ersten Umlaufkante definiert ablöst und an den das erste Schließglied im Bereich des Leckagehohlraumes berandenden Flächen sicher tangential und radial nach innen vorbeigeführt wird. Zu diesem Zweck besitzt eine dem Leckagehohlraum zugewandte stirnseitige Begrenzung des ersten Schließgliedes einen axialen Sicherheitsabstand von der Übergangsfläche, der unter allen möglichen fertigungstechnischen Gegebenheiten ein diesbezügliches Auftreffen verhindert und außerdem eine optimale Ejektorwirkung der zweiten Sitzreinigungsströmung im Sitzbereich des ersten Schließglieds sicherstellt. Es hat sich weiterhin als günstig mit Blick auf eine Vermeidung jeglicher Staudruckbildung herausgestellt, wenn die erste Umlaufkante mit einer kleinstmöglichen ersten Eckenabrundung abgerundet ist. Im Idealfall wäre hier eine scharfkantige Ausführung vorzusehen, die jedoch aus festigungstechnischen und praktischen Gründen (Gefährdung der ersten Dichtung) nicht zulässig ist.

Gemäß einem weiteren Vorschlag bildet die ringförmige Ausnehmung im Gehäuse mit der Übergangsfläche einen senkrechten Umlenkwinkel (90 Grad), der eine sichere, kollisionsfreie Überströmung des ersten Schließgliedes durch die zweite Sitzreinigungsströmung am ehesten sicherstellt. Der Übergang zwischen der ringförmigen Ausnehmung und der Übergangsfläche wird dabei vorteilhaft mit einem Ausrundungsradius gerundet. Es kann auch ein stumpfer Umlenkwinkel (> 90 Grad) ausgeführt werden, wobei dieser die zweite Sitzreinigungsströmung zwar zielgerichteter in die Ablaufbohrung einleitet, jedoch mit Blick auf die erste Sitzreinigungsströmung staudruckbildend wirken kann, weil die Strömungsrichtung der ersten Sitzreinigungsströmung dann mit einer Richtungskomponente der Übergangsfläche übereinstimmt.

Um Staudruckbildung bei dem Eintritt der ersten Sitzreinigungsströmung in die Umlenkfläche im zweiten Schließglieds zu vermeiden, bildet die Umfangswand mit der Anschlagfläche eine zweite Umlaufkante aus, die zweckmäßig mit einer kleinstmöglichen zweiten Eckenabrundung abgerundet ist. Ein scharfkantiger Übergang in diesem Bereich ist aus fertigungstechnischen und praktischen Gründen nicht zulässig, ein relativ großer Abrundungsradius ist hingegen kontraproduktiv und führt zur unerwünschten Staudruckbildung.

Im Sinne einer optimalen Strömungsführung der ersten Sitzreinigungsströmung besteht die Kontur der Umlenkfläche aus einer Abfolge gekrümmter Abschnitte, die an ihren Übergangsstellen jeweils eine gemeinsame Tangente besitzen.

Um Wirbel- und Staudruckbildung nicht nur im Bereich der vorstehend beschriebenen Sitzflächen des Doppelsitzventils zu vermeiden, ist es von Vorteil, wenn auf jegliche Einbauten und Hindernisse im übrigen Leckagehohlraum, soweit dies konstruktiv möglich ist, verzichtet wird. Diesbezüglich durchdringt eine mit dem ersten Schließglied verbundene erste Verstellstange eine mit dem zweiten Schließglied verbundene, als Hohlstange ausgeführte zweite Verstellstange konzentrisch, setzt sich fliegend durch die Ablaufbohrung hindurch fort und ist an einem dem zweiten Schließglied abgewandten Ende des ersten Schließgliedes mit letzterem über wenigstens eine im Wesentlichen radial orientierte Traverse fest verbunden. Dadurch werden die ansonsten im Bereich des Leckagehohlraums üblichen Streben und anderen Verbindungsmittel vermieden und an ein relativ weit vom Leckagehohlraum entferntes Ende, wo sie keine störenden Einflüsse auf die Strömungsführung mehr haben können, verlagert.

Um den Strömungswiderstand insbesondere im querschnittsreduzierten Bereich der Ablaufbohrung zu verringern, sieht ein weiterer Vorschlag vor, dass die erste Verstellstange wenigstens im axialen Erstreckungsbereich des Verbindungsteils in ihrem Querschnitt reduziert ist, und zwar auf einen querschnittsreduzierten Ventilstangenbereich.

Eine hinreichende Drosselung der Sitzreinigungsströmungen ist eine notwendige Voraussetzung zur Lösung der anmeldungsgemäßen Aufgabe. Um die Drosselwirkung der Drosselspalte über das mit Bemessungsmaßnahmen für die radiale Spaltweite und die Länge erreichbare Maß hinaus zu vergrößern oder die gleiche Drosselwirkung mit einer größeren radialen Spaltweite und/oder einer kürzeren Spaltlänge zu erreichen, sieht ein weiterer Vorschlag vor, wobei eine turbulente Strömung im jeweiligen Drosselspalt vorausgesetzt wird, dass ein zylindrischer erster Ansatz am ersten Endabschnitt und ein zylindrischer zweiter Ansatz am zweiten Endabschnitt jeweils auf seiner den zugeordneten Drosselspalt begrenzenden Umfangsfläche in Form einer Labyrinthdichtung ausgebildet ist, deren strömungsmechanische Wirkung an sich bekannt ist. Dies kann dadurch erreicht werden, dass die Labyrinthdichtung in Form einer Anzahl umlaufender Nuten ausgeführt ist. Eine andere Ausführungsform sieht vor, dass die Labyrinthdichtung in Form einer Anzahl über die Umfangsfläche des zylindrischen Ansatzes verteilter, am jeweiligen Ort ihrer Ausbildung flächenmäßig begrenzter, nicht miteinander verbundener Ausnehmungen ausgeführt ist.

KURZBESCHREIBUNG DER ZEICHNUNGEN

Eine eingehendere Darstellung der Erfindung ergibt sich aus der folgenden Beschreibung und den beigefügten Figuren der Zeichnung sowie aus den Ansprüchen. Während die Erfindung in einer Vielzahl von Ausführungsformen einer grundsätzlichen ersten Schließgliedkonfiguration eines sitzreinigungsfähigen Doppelsitzventils gemäß WO 2007/054 131 A1 realisiert ist, werden anhand der Zeichnung zwei bevorzugte Ausführungsformen dieser ersten Schließgliedkonfiguration beschrieben. Bei weitere Ausführungsbeispielen, die sich auf eine grundsätzliche zweite Schließgliedkonfiguration gemäß WO 2007/054 134 A1 stützen (**Figur 1,** rechter Teil und **Figur 1b**; **Figuren 1h, 1 i, 1j, 1k und 4**), handelt es sich nicht um einen Teil der Erfindung, sondern um einen Stand der Technik, der das Verständnis der Erfindung erleichtert. Es zeigen

| | |
|---|---|
| **Figur 1** | im Meridianschnitt den grundsätzlichen Aufbau eines sitzreinigungsfähigen Doppelsitzventils ohne einen Antrieb, und zwar außerhalb eines mit **"B"** gekennzeichneten Bereichs, wobei die Schließstellung des Doppelsitzventils dargestellt ist und in dem Bereich **B** zwei grundsätzlich sich unterscheidende Schließgliedkonfigurationen nur schematisch dargestellt sind; |
| **Figur 1a** | den sich links von der Längsachse des Doppelsitzventils befindenden Bereich **B** gemäß **Figur 1** mit einer Mitteldichtung zwischen den beiden Schließgliedern, wobei die dort dargestellte grundsätzliche erste Schließgliedkonfiguration von der vorliegenden Erfindung weiterentwickelt wird |

und das erste Schließglied im Zuge seiner Öffnungsbewegung am zweiten Schließglied über die Mitteldichtung dichtend zur Anlage kommt;

**Figur 1 b** den sich rechts von der Längsachse des Doppelsitzventils befindenden Bereich **B** gemäß **Figur 1,** wobei das zweite Schließglied an seinem dem ersten Schließglied zugewandten zweiten Endabschnitt eine rotationssymmetrische Ausnehmung mit einer zylindrischen, mit der zylindrischen ersten Sitzfläche fluchtenden Umfangswand besitzt und die Umfangswand der Ausnehmung so dimensioniert ist, um während der Öffnungsbewegung das erste Schließglied dichtend aufzunehmen, bevor das zweite Schließglied öffnet;

**Figuren 1c bis 1g** in schematischer Darstellung mögliche Ausführungsformen der in **Figur 1a** dargestellten ersten Schließgliedkonfiguration mit Mitteldichtung, wobei die jeweilige Darstellung auf den in **Figur 1a** mit "**X**" gekennzeichneten Auswahlbereich beschränkt ist;

**Figuren 1h bis 1k** in schematischer Darstellung mögliche Ausführungsformen der in **Figur 1 b** dargestellten zweiten Schließgliedkonfiguration mit der Ausnehmung im zweiten Schließglied, wobei die jeweilige Darstellung auf den in **Figur 1 b** mit "**Y**" gekennzeichneten Auswahlbereich beschränkt ist und diese Ausführungsformen nicht Teil der Erfindung sind;

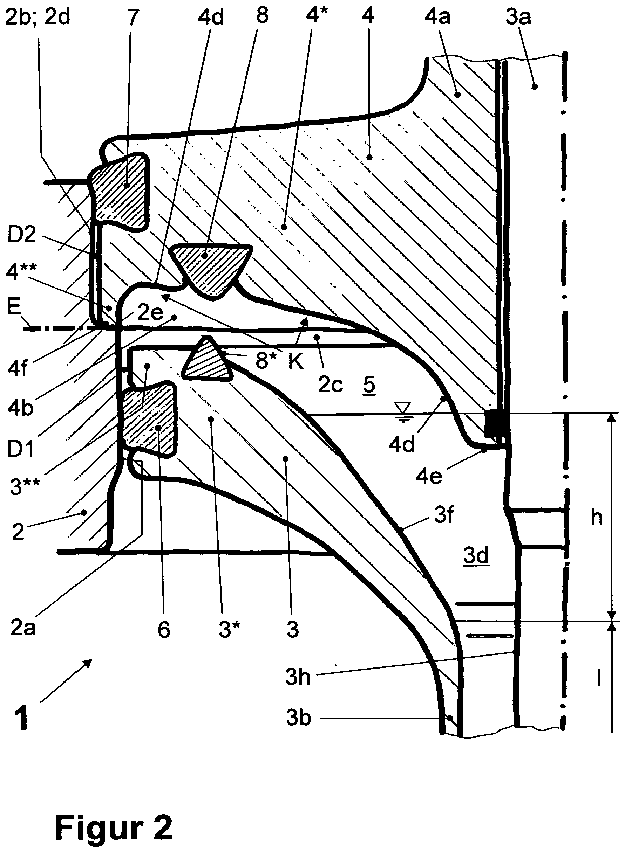

**Figur 2** im Meridianschnitt den Sitzbereich des Doppelsitzventils links von seiner Längsachse gemäß **Figur 1c,** wobei die Schließstellung des Doppelsitzventils dargestellt ist und eine ringförmige Ausnehmung in einer Verbindungsöffnung des Ventilgehäuses mit einer Übergangsfläche einen senkrechten Umlenkwinkel bildet;

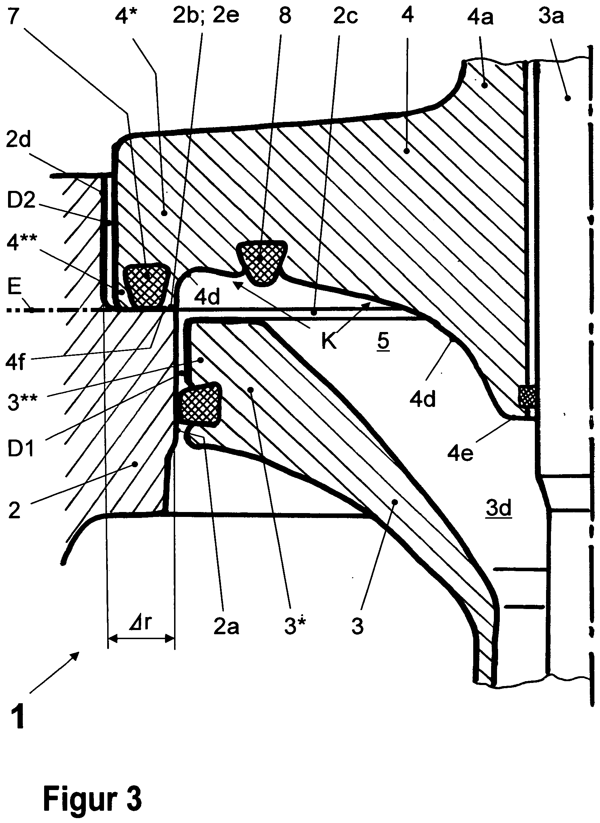

**Figur 3** im Meridianschnitt den Sitzbereich des Doppelsitzventils links von seiner Längsachse gemäß **Figur 1f,** wobei die Schließstellung des Doppelsitzventils dargestellt ist und eine ringförmige Ausnehmung in einer Verbindungsöffnung des Ventilgehäuses mit einer Übergangsfläche einen senkrechten Umlenkwinkel bildet und die Übergangsfläche dem zweiten Schließglied als Sitzfläche dient;

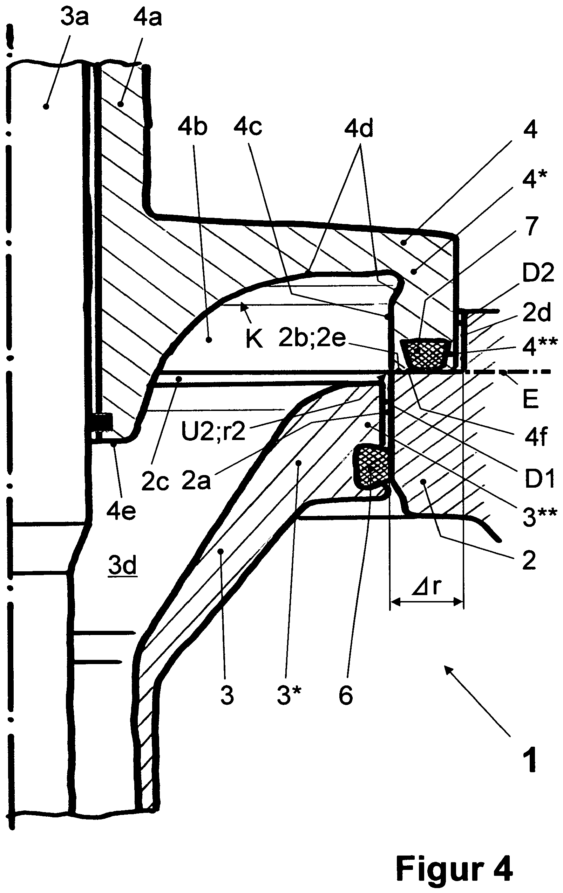

**Figur 4** im Meridianschnitt den Sitzbereich des Doppelsitzventils rechts von seiner Längsachse gemäß **Figur 1 j**, wobei die Schließstellung des Doppelsitzventils dargestellt ist und eine ringförmige Ausnehmung in einer Verbindungsöffnung des Ventilgehäuses mit einer Übergangsfläche einen senkrechten Umlenkwinkel bildet und die Übergangsfläche dem zweiten Schließglied als Sitzfläche dient;

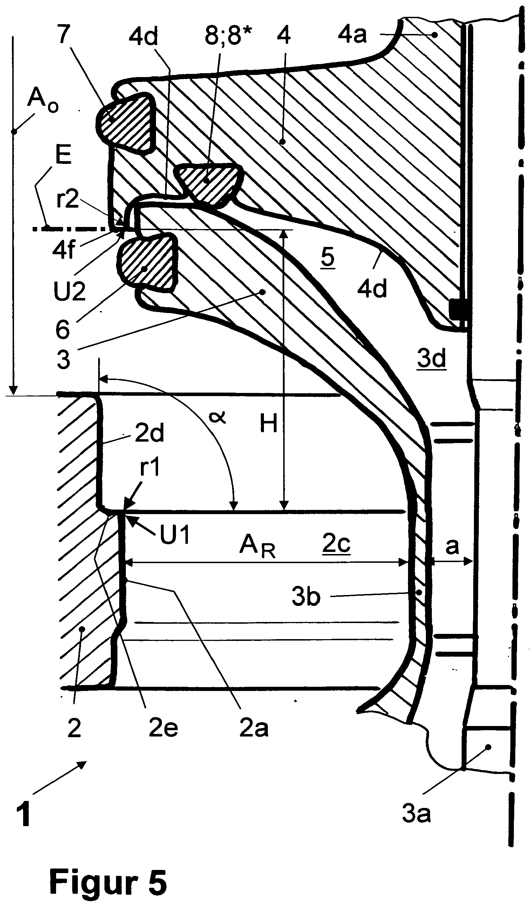

**Figur 5** im Meridianschnitt das Doppelsitzventil gemäß **Figur 2,** wobei die Offenstellung des Doppelsitzventils dargestellt ist;

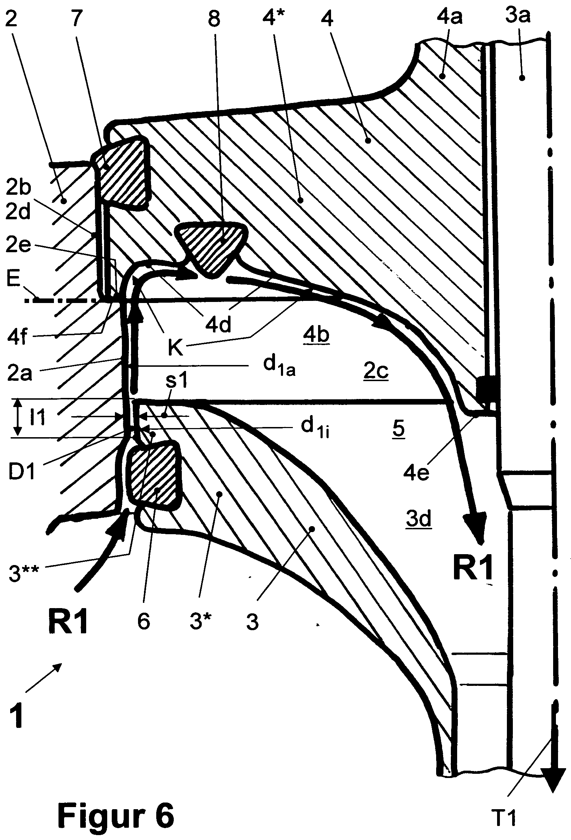

**Figur 6** im Meridianschnitt das Doppelsitzventil gemäß **Figur 2,** wobei sich das als Schieberkolben ausgebildete erste Schließglied in seiner Sitzreinigungsstellung befindet und der Verlauf der ersten Sitzreinigungsströmung dargestellt ist und

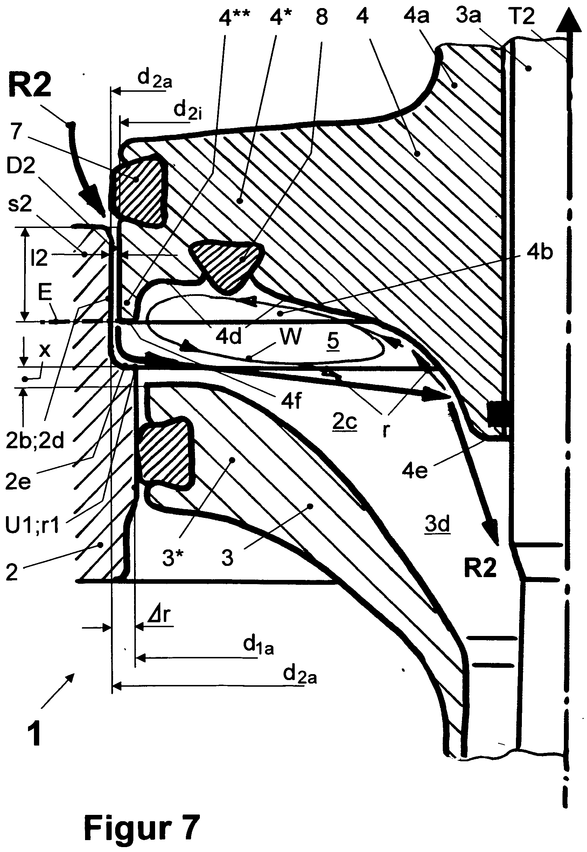

**Figur 7** im Meridianschnitt das Doppelsitzventil gemäß **Figur 2,** wobei sich das gleichfalls als Schieberkolben ausgebildete zweite Schließglied in seiner Sitzreinigungsstellung befindet und der Verlauf der zweiten Sitzreinigungsströmung dargestellt ist.

DETAILLIERTE BESCHREIBUNG

Das erfindungsgemäße sitzreinigungsfähige Doppelsitzventil 1 (**Figuren 1** (linker Teil), **1a, 1c** bis **1g, 2, 3, 5** bis **7**) und das bekannte sitzreinigungsfähige Doppelsitzventil 1 (**Figuren 1** (rechter Teil), **1b, 1h** bis **1k, 4)** bestehen im Wesentlichen aus dem Ventilgehäuse 10 mit einem ersten und einem zweiten Ventilgehäuseteil 1 a bzw. 1b, den zwei unabhängig voneinander bewegbaren Schließgliedern 3 und 4 mit den jeweils zugeordneten Verstellstangen 3a bzw. 4a und einem Sitzring 2, der über eine innenseitige Verbindungsöffnung 2c eine Verbindung zwischen den Ventilgehäuseteilen 1 a, 1 b herstellt.

Das als Schieberkolben ausgebildete erste Schließglied 3 (unabhängig angetriebenes, aktives Schließglied) findet in der Schließstellung des Doppelsitzventils 1 in einer von der Verbindungsöffnung 2c gebildeten ersten Sitzfläche 2a, die als zylindrische Sitzfläche ausgeführt ist, dichtend Aufnahme (**Figuren 1, 1a** bis **1k, 2** bis **4, 7**). Hierzu ist in dem Schieberkolben 3 eine erste Dichtung 6 vorgesehen, die ausschließlich durch radiale Vorspannung mit der ersten Sitzfläche 2a zusammenwirkt (radiale Dichtung im Gleiteingriff). Das zweite Schließglied 4 (abhängig angetriebenes, passives Schließglied) wirkt in der Schließstellung des Doppelsitzventils 1 mit einer zweiten Sitzfläche 2b dichtend zusammen (**Figuren 1, 1a, 1b),** die zylindrisch (**Figuren 1c, 2, 6),** kegelförmig (**Figuren 1d, 1e, 1h, 1i)** oder senkrecht zur Längsachse des Doppelsitzventils 1 (**Figuren 1f, 1g, 1j, 1k, 3, 4)** ausgeführt sein kann.

Bei der zylindrischen Ausführung des Ventilsitzes ist die zweite Sitzfläche 2b durch eine im Wesentlichen zylindrische ringförmige Ausnehmung 2d in der Verbindungsöffnung 2c gebildet. Die Abdichtung erfolgt über eine zweite Dichtung 7, die ausschließlich durch radiale Vorspannung mit der zweiten Sitzfläche 2b zusammenwirkt (radiale Dichtung im Gleiteingriff).

Bei der kegelförmigen Ausführung des Ventilsitzes ist die zweite Sitzfläche 2b durch eine Übergangsfläche 2e (**Figuren 1e, 1i**) oder durch eine sich nach oben hin an die zylindrische ringförmige Ausnehmung 2d anschließende Fläche gebildet (**Figuren 1d, 1h**). Die Abdichtung erfolgt über die zweite Dichtung 7, die axial/radial gegenüber der zweiten Sitzfläche 2b im Gleit-/Druckeingriff abdichtet.

Bei der Ausführung des Ventilsitzes senkrecht zur Längsachse des Doppelsitzventils 1 ist die zweite Sitzfläche 2b durch die Übergangsfläche 2e (**Figuren 1f, 1 j, 3, 4**) oder durch eine sich nach oben hin an die zylindrische ringförmige Ausnehmung 2d anschließende Fläche gebildet (**Figuren 1g, 1k**). Die zweite Dichtung 7 dichtet axial gegenüber der zweiten Sitzfläche 2b im Druckeingriff ab. Diese Lösung ist dann realisierbar, wenn die axial wirkende zweite Dichtung 7 so duktil ist, dass die Anschlagposition des zweiten Schließgliedes 4 nach wie vor an der ventilgehäuseseitigen, im Bereich der in die erste Sitzfläche 2a austretenden Übergangsfläche 2e sichergestellt ist.

Die beiden Schließglieder 3, 4 bilden sowohl in der jeweils dargestellten Schließ-(**Figuren 1** bis **4, 6, 7**) als auch in einer Offenstellung (**Figur 5** aus **Figur 1c**) zwischen sich einen Leckagehohlraum 5, der über eine Ablaufbohrung 3d, die von einem an dem ersten Schließglied 3 ausgebildeten, aus dem ersten Ventilgehäuseteil 1 a in die Umgebung des Doppelsitzventils 1 herausgeführten Rohrschaft berandet ist, mit der Umgebung des Doppelsitzventils 1 verbunden ist (s. insbesondere **Figuren 1, 2**). Die Ablaufbohrung 3d insgesamt wird radial außenseits, beginnend vom Leckagehohlraum 5, von einem Einlauftrichter 3f, einem sich anschließenden Verbindungsteil 3b und einem sich an letzterem fortsetzenden Druckausgleichskolben 3c begrenzt, wobei letzter vorzugsweise einen der ersten Sitzfläche 2a entsprechenden oder annähernd entsprechenden Außendurchmesser aufweist Die Ablaufbohrung 3d durchdringt den Rohrschaft vorzugsweise konzentrisch, und sie verjüngt sich vom leckagehohlraumseitigen Ende des ersten Schließgliedes 3 in dem Einlauftrichter 3f konusförmig und stetig bis zum Verbindungsteil 3b und weist in letzterem auf einer begrenzten Länge I einen unveränderten, minimalen Ablaufquerschnitt a auf.

Die Ventilgehäuseteile 1 a, 1 b sind entsprechend dem größten Nenndurchtrittsquerschnitt $A_o$ einer an das Ventilgehäuse 10 anschließbaren Rohrleitung ausgeführt (**Figur 1**) und über den die Verbindungsöffnung 2c innenseits ausbildenden Sitzring 2 miteinander verbunden. Das Verbindungsteil 3b des Rohrschaftes, das einen Abschnitt der Ablaufbohrung 3d innenseitig ausbildet, durchdringt beim vollen Öffnungshub H des Doppelsitzventils 1 (**Figuren 5, 1**) mindestens die Verbindungsöffnung 2c und ist dort radial außenseitig derart bemessen, dass die Verbindungsöffnung 2c an ihrer engsten Stelle einen Ringraum mit einem RingraumDurchtrittsquerschnitt $A_R$ ausbildet, der mindestens dem Nenndurchtrittsquerschnitt $A_o$ entspricht ($A_R \geq A_o$).

Die mit dem ersten Schließglied 3 verbundene erste Verstellstange 3a durchdringt die mit dem zweiten Schließglied 4 verbundene, als Hohlstange ausgeführte, im Durchdringungsbereich mit dem zweiten Ventilgehäuseteil 1 b als zweiter Druckausgleichskolben 4g ausgebildete zweite Verstellstange 4a konzentrisch (**Figur 1**), setzt sich fliegend durch die Ablaufbohrung 3d hindurch fort und ist an einem dem zweiten Schließglied 4 abgewandten Ende des ersten Schließgliedes 3, das als Ring 3g ausgebildet ist, mit letzterem über wenigstens eine im Wesentlichen radial orientierte Traverse 3e fest verbunden. Die erste Verstellstange 3a ist zur Verringerung des Strömungswiderstandes in der Ablaufbohrung 3d vorzugsweise wenigstens im axialen Erstreckungsbereich des Verbindungsteils 3b in ihrem Querschnitt reduziert, und zwar auf einen querschnittsreduzierten Ventilstangenbereich 3h. Durch die weit vom Leckagehohlraum 5 entfernt angeordneten Traversen 3e bleibt bei dieser bevorzugten Ausführungsform der Einlauftrichter 3f frei von Strömungsbarrieren, und es werden dadurch negative Rückwirkungen auf die Strömungsverhältnisse und das Strömungsbild im Leckagehohlraum 5 vermieden.

Jedes Schließglied 3, 4 weist an einem Endabschnitt 3* bzw. 4* einen zylindrischen Ansatz 3** bzw. 4** auf (**Figuren 2, 3, 4**), wobei letzterer jeweils mit dem zugeordneten Teil der Verbindungsöffnung 2c im Sitzring 2, im unteren Bereich mit der zylindrischen ersten Sitzfläche 2a und im oberen Bereich mit der ringförmigen Ausnehmung 2d, einen ringförmigen ersten Drosselspalt D1 bzw. einen ringförmigen zweiten Drosselspalt D2 (**Figuren 1c** bis **1k, 2, 3, 4, 6, 7**) bildet.

Die **Figuren 1c** bis **1g** verdeutlichen in Verbindung mit den diesbezüglich detaillierteren Darstellungen der **Figuren 2** (nach **Figur 1c**) und **3** (nach **Figur 11f**) Einzelheiten der grundsätzlichen ersten Schließgliedkonfiguration mit einer zwischen den beiden Schließgliedern 3, 4 angeordneten Mitteldichtung 8 im zweiten Schließglied 4 oder einer Mitteldichtung 8* im ersten Schließglied 3 (**Figur 2**). Die Mitteldichtung 8, 8* dichtet die Schließglieder 3, 4 bei ihrer Öffnungs- und Schließbewegung und in der Offenstellung ab (**Figur 5**).

Die **Figuren 1h** bis **1 k** zeigen in Verbindung mit der diesbezüglich detaillierteren Darstellung der **Figur 4** (nach **Figur 1j**) Einzelheiten der grundsätzlichen zweiten Schließgliedkonfiguration. Diese ist dadurch gekennzeichnet, dass das zweite Schließglied 4 an seinem dem ersten Schließglied 3 zugewandten Ende eine Ausnehmung 4b mit einer im Wesentlichen zylindrischen, mit der zylindrischen ersten Sitzfläche 2a fluchtenden Umfangswand 4c besitzt. Diese Umfangswand 4c ist dabei so dimensioniert, dass sie während der Öffnungsbewegung den ersten Endabschnitt 3* und die radiale erste Dichtung 6 des ersten Schließgliedes 3 dichtend aufnimmt, bevor das zweite Schließglied 4 öffnet.

Die **Figuren 2** bis **7** verdeutlichen Einzelheiten des Sitzbereichs für das Doppelsitzventil 1 in seiner grundsätzlichen ersten und zweiten Schließgliedkonfiguration. Bei der ersten Schließgliedkonfiguration bildet in einer bevorzugten Ausführungsform das erste Schließglied 3 mit seinem zylindrischen ersten Ansatz 3** (**Figuren 6, 2** aus **Figur 1c**), der

einen ersten Schließglieddurchmesser $d_{1i}$ aufweist, und mit der zugeordneten ersten Sitzfläche 2a der Verbindungsöffnung 2c, die einen ersten Sitzdurchmesser da aufweist, den ersten Drosselspalt D1. Zwischen den beiden Durchmessern $d_{1a}$ und $d_{1i}$ wird auf einer ersten Drosselspaltlänge l1 die radiale erste Spaltweite s1 gebildet. Das zweite Schließglied 4 formt in gleicher Weise mit seinem zylindrischen zweiten Ansatz 4** (**Figuren 7, 2**), der einen zweiten Schließglieddurchmesser $d_{2i}$ aufweist, und mit der zylindrischen ringförmigen Ausnehmung 2d in der Verbindungsöffnung 2c, die gleichzeitig die zylindrische zweite Sitzfläche 2b mit einem zweiten Sitzdurchmesser $d_{2a}$ bildet, den zweiten Drosselspalt D2. Zwischen den beiden Durchmessern $d_{2a}$ und $d_{2i}$ wird auf einer zweiten Drosselspaltlänge l2 die radiale zweite Spaltweite s2 gebildet.

Eine andere Ausführungsform der grundsätzlichen ersten Schließgliedkonfiguration nach **Figur 3** (aus **Figur 1f)** zeichnet sich im Unterschied zur vorstehenden dadurch aus, dass die Übergangsfläche 2e, die senkrecht zur Längsachse des Doppelsitzventils 1 orientiert ist, als zweite Sitzfläche 2b fungiert und die ringförmige Ausnehmung 2d ausschließlich der Bildung des zweiten Drosselspaltes D2 dient, der, bezogen auf die zweite Dichtung 7, auf der dem Leckagehohlraum 5 abgewandten Seite dieser zweiten Dichtung 7 angeordnet ist.

Eine Ausführungsform der grundsätzlichen zweiten Schließgliedkonfiguration nach **Figur 4** (aus **Figur 1 j),** die nicht Teil der Erfindung ist, unterscheidet sich von der erfindungsgemäßen Ausführungsform gemäß **Figur 3** dadurch, dass die Mitteldichtung 8, 8* im zweiten Schließglied 4 bzw. im ersten Schließglied 3 entfällt und das zweite Schließglied 4 an seinem dem ersten Schließglied 3 zugewandten Ende die Ausnehmung 4b mit der im Wesentlichen zylindrischen, mit der zylindrischen ersten Sitzfläche 2a fluchtenden Umfangswand 4c besitzt, wobei letztere in eine Umlenkfläche 4d übergeht. Diese Umfangswand 4c ist dabei so dimensioniert, dass sie während der Öffnungsbewegung den ersten Endabschnitt 3* und die radiale erste Dichtung 6 des ersten Schließgliedes 3 dichtend aufnimmt, bevor das zweite Schließglied 4 öffnet.

Der halbe Durchmesserunterschied zwischen der ringförmigen Ausnehmung 2d **(Figuren 3, 4, 7),** die gleichzeitig die zweite Sitzfläche 2b sein kann, und der ersten Sitzfläche 2a bildet einen radialen Erstreckungsbereich $\Delta r = (d_{2a} - d_{1a})/2$ **(Figur 7)**. In letzterem ist die Übergangsfläche 2e zwischen der ersten Sitzfläche 2a und der ringförmigen Ausnehmung 2d vorgesehen, wobei wenigstens der in die erste Sitzfläche 2a ausmündende Endabschnitt der Übergangsfläche 2e mit der zylindrischen Mantelfläche der ringförmigen Ausnehmung 2d und damit auch der zylindrischen ersten Sitzfläche 2a vorzugsweise einen senkrechten Umlenkwinkel $\alpha$ ($\alpha$ = 90 Grad) bildet **(Figur 5)**. Dabei weist die ringförmige Ausnehmung 2d bzw. die zweite Sitzfläche 2b in der Verbindungsöffnung 2c zweckmäßig einen mit einem Ausrundungsradius ausgeführten gerundeten Übergang zur Übergangsfläche 2e auf, wobei der Ausrundungsradius kleiner als der radiale Erstreckungsbereich Zur ausgeführt ist. Der radiale Erstreckungsbereich $\Delta r$ wird so groß ausgeführt, dass eine in der Sitzreinigungsstellung des zweiten Schließgliedes 4 aus dem zweiten Drosselspalt D2 in den Leckagehohlraum 5 austretende zweite Sitzreinigungsströmung R2 **(Figur 7)** an der Übergangsfläche 2e zum Zentrum des Leckagehohlraumes 5 hin und sicher über das erste Schließglied 3 hinweg umgelenkt wird. Um sicherzustellen, dass die zweite Sitzreinigungsströmung R2 nicht vorzeitig in Richtung des ersten Schließgliedes 3 abgelenkt wird, ist eine von der Übergangsfläche 2e und der ersten Sitzfläche 2a gebildete erste Umlaufkante U1 mit einer kleinstmöglichen ersten Eckenabrundung r1 abgerundet, wodurch an dieser Stelle eine definierte Strömungsabrissstelle entsteht (**Figuren 5, 7**).

Durch die Übergangsfläche 2e selbst und ihre spezielle Ausgestaltung werden weiterhin sichergestellt, dass die aus dem zweiten Drosselspalt D2 austretende zweite Sitzreinigungsströmung R2 nicht auf den Sitzbereich der ersten Dichtung 6 gerichtet ist. Darüber hinaus muss der radiale Erstreckungsbereich $\Delta r$ der Übergangsfläche 2e auch die Realisierung einer ventilgehäuseseitigen Anschlagfläche **(Figuren 2 bis 7)** für das zweite Schließglied 4 sicherstellen, damit ein dem Leckagehohlraum 5 unmittelbar benachbarter fester (ggf. metallischer) Anschlag des zweiten Schließgliedes 4 am Sitzring 2 zu verwirklichen ist. Die ventilgehäuseseitige Anschlagfläche bzw. der entsprechende Abschnitt der Übergangsfläche 2e, der unmittelbar an die zylindrische erste Sitzfläche 2a angrenzt, korrespondiert mit einer an der Stirnseite des zylindrischen zweiten Ansatzes **4*** vorgesehenen Anschlagfläche 4f. Der als ventilgehäuseseitige Anschlagfläche fungierende Abschnitt der Übergangsfläche 2e und die schließgliedseitige Anschlagfläche 4f sind vorzugsweise jeweils geradlinig und entsprechend dem Umlenkwinkel $\alpha$ entweder vorzugsweise im rechten Winkel oder auch in einem stumpfen Winkel zur Längsachse des Doppelsitzventils 1 ausgeführt ($\alpha \geq$ 90 Grad).

Bei der grundsätzlichen ersten Schließgliedkonfiguration **(Figuren 1c** bis **1g)** besitzt das zweite Schließglied 4 an seinem dem ersten Schließglied 3 zugewandten zweiten Endabschnitt 4* die rotationssymmetrische Ausnehmung 4b **(Figur 2** aus **Figur 1c; Figur 3** aus **Figur 1f),** die sich in der Schließstellung des Doppelsitzventils 1 radial außenseitig durchmesserbündig an die zylindrische erste Sitzfläche 2a anschließt. Dabei ist die Ausnehmung 4b von der Umlenkfläche 4d begrenzt, deren Kontur K, im Meridianschnitt gesehen, einen knickfreien Verlauf aufweist, wobei das radial außenseitige Ende der Umlenkfläche 4d unmittelbar in der stirnseitigen Begrenzungsfläche des zweiten Endabschnitts **4*,** der Anschlagfläche 4f, ausmündet. Mit einem ihrem radial außenseitigen Ende abgewandten Erstreckungsbereich berandet die Umlenkfläche 4d den restlichen Bereich der Ausnehmung 4b in Gänze, und sie mündet an einem dem ersten Schließglied 3 zugewandten stirn- und radial innenseitigen Ende 4e des zweiten Schließgliedes 4 aus letzterem aus. Dabei ist es besonders vorteilhaft, wenn die Umlenkfläche 4d sehr weitreichend radial nach innen und axial zum ersten Schließglied 3 hin geführt ist, und zwar bis zu einem konstruktiv äußerst möglichen, das zweite Schließglied 4 begrenzenden Ende.

Für die Positionierung des stirn- und radial innenseitigen Endes 4e, das mit Blick auf die vorstehende raumbildende Definition der Ausnehmung 4b nicht als ein begrenzender Bereich derselben anzusehen ist, wird die folgende Ausführungsform vorgeschlagen. Bei dieser in den **Figuren 2** bis **7** dargestellten Ausführungsform ragt das stirn- und radial innenseitige Ende 4e des zweiten Schließgliedes 4, in der Längsachse des Doppelsitzventils 1 gesehen, über den gedachten Raum, der durch die durch die Anschlagfläche 4f hindurchgehende Ebene E stirnseitig begrenzt ist, hinaus. In den dargestellten Ausführungsbeispielen greift die Umlenkfläche 4d bis in den Eintritt der Ablaufbohrung 3d hinein.

Im Unterschied zur grundsätzlichen ersten Schließgliedkonfiguration mündet bei der grundsätzlichen zweiten Schließgliedkonfiguration (**Figuren 1 h** bis **1 k**) das radial außenseitige Ende der Umlenkfläche 4d mittelbar in der stirnseitigen Begrenzungsfläche des zweiten Endabschnitts 4* aus **(Figur 4** aus **Figur 1j).** An dieser radial außenseitigen Ausmündungsstelle aus dem zweiten Endabschnitt 4* besitzt die Ausnehmung 4b die im Wesentlichen zylindrische, mit der zylindrischen ersten Sitzfläche 2a fluchtende Umfangswand 4c, die stetig, d.h. ohne Knick, in die Umlenkfläche 4d übergeht. Die übrigen Merkmale der Ausnehmung 4b und ihrer Berandung gemäß der ersten Schließgliedkonfiguration sind uneingeschränkt auf die zweite Schließgliedkonfiguration übertragbar.

Eine von der Umlenkfläche 4d **(Figur 5)** oder der Umfangswand 4c **(Figur 4)** einerseits und der Anschlagfläche 4f andererseits gebildete zweite Umlaufkante U2, die mit einer kleinstmöglichen zweiten Eckenabrundung r2 abgerundet ist, grenzt in der Schließstellung des zweiten Schließgliedes 4 **(Figuren 2, 3, 4, 6)** unmittelbar an die erste Sitzfläche 2a an. Im Meridianschnitt gesehen weist die Umlenkfläche 4d die Kontur K mit knickfreiem Verlauf auf, wobei diese vorzugsweise aus einer Abfolge gekrümmter Abschnitte besteht (z.B. Kreisbogen, Ellipsen, Parabeln, Hyperbeln), die an ihren Übergangsstellen jeweils eine gemeinsame Tangente besitzen. Aus der Richtung einer ersten Sitzreinigungsströmung R1 **(Figur 6)** im Bereich des stirn- und radial innenseitigen Endes 4e wird ersichtlich, unter welchem Richtungsvektor die Umlenkfläche 4d aus dem zweiten Schließglied 4 ausmündet, und es ist weiterhin ersichtlich, dass mit der erfindungsgemäß ausgestalteten Umlenkfläche 4d die erste Sitzreinigungsströmung R1 sehr zielgerichtet und stoßfrei in die Ablaufbohrung 3d umgelenkt und auf einem längsmöglichen Strömungsweg im zweiten Schließglied 4 zwangsweise geführt ist. Eine Kollision der ersten Sitzreinigungsströmung R1 mit den den Leckagehohlraum 5 berandenden Bereichen ist an keiner Stelle gegeben.

Eine dem Leckagehohlraum 5 zugewandte stirnseitige Begrenzung des ersten Schließgliedes 3 besitzt in dessen Schließstellung einen axialen Sicherheitsabstand x von der Übergangsfläche 2e **(Figur 7),** wobei dieser Sicherheitsabstand x zum Einen eine Kollision des ersten Schließglieds 3 mit der zweiten Sitzreinigungsströmung R2 verhindert und zum Anderen eine hinreichende Ejektorwirkung der zweiten Sitzreinigungsströmung R2 im Sitzbereich des ersten Schließglieds 3 sicherstellt.

Die Sitzreinigung des erfindungsgemäßen Doppelsitzventils 1 wird stellvertretend für alle Ausführungsformen der grundsätzlichen ersten Schließgliedkonfiguration gemäß den Figuren 1c bis 1g, die Teil der Erfindung ist, und der grundsätzlichen zweiten Schließgliedkonfiguration gemäß den **Figuren 1 h** bis **1 k**, die Stand der Technik ist, anhand der Ausführungsform gemäß **Figur 2** (nach **Figur 1c)** nachfolgend beschrieben. Die nach Vollzug eines ersten Teilhubes T1 aus dem ersten Drosselspalt D1 **(Figuren 6, 2, 1)** im Zuge der Sitzreinigung des ersten Schließgliedes 3 austretende erste Sitzreinigungsströmung R1 strömt zunächst an der ersten Sitzfläche 2a entlang, überbrückt den Kontaktspalt zwischen der Übergangsfläche 2e und der Anschlagfläche 4f ohne abzulösen, folgt der Umlenkfläche 4d und überbrückt und glättet strömungstechnisch dabei die Mitteldichtung 8, falls diese im zweiten Schließglied 4 und nicht als Mitteldichtung 8* im ersten Schließglied 3 angeordnet ist. Im weiteren Verlauf der Umlenkfläche 4d ist die erste Sitzreinigungsströmung R1 radial nach innen und axial zum ersten Schließglied 3 hin bis zum Verlassen des zweiten Schließgliedes 4 an dem vorzugsweise außerhalb der Ausnehmung 4b befindlichen stirn- und radial innenseitigen Ende 4e des zweiten Schließgliedes 4 zwangsweise geführt und gelangt schließlich zielgenau in den Eintrittsbereich der Ablaufbohrung 3d. Das leckagehohlraumseitige Ende des in den **Figuren 2, 7** bezeichneten zweiten Drosselspaltes D2 ist durch die Anschlagposition des zweiten Schließgliedes 4 an der ventilgehäuseseitigen Anschlagfläche 2e weitestgehend dicht verschlossen. Reinigungsflüssigkeit der ersten Sitzreinigungsströmung R1 kann nicht in den zweiten Drosselspalt D2 und damit in den Bereich der zweiten Dichtung 7 eintreten. Selbst bei ggf. stark beschädigter oder ggf. gänzlich entfernter zweiter Dichtung 7 ist daher dort kein Durchtritt für Reinigungsflüssigkeit mehr gegeben, zumal durch die Ejektorwirkung der ersten Sitzreinigungsströmung R1 der in Rede stehende Kontaktspalt besaugt wird.

Wird das sitzreinigungsfähige Doppelsitzventil 1 im Rahmen der grundsätzlichen zweiten Schließgliedkonfiguration (**Figuren 1 h** bis **1 k**) realisiert und wird beispielsweise die Ausführungsform gemäß **Figur 4** (aus **Figur 1j**) gewählt, dann folgt die erste Sitzreinigungsströmung R1, nachdem sie den Kontaktspalt zwischen der Übergangsfläche 2e und der Anschlagfläche 4f ohne abzulösen überbrückt hat, der Umfangswand 4c und glättet strömungstechnisch einen der Aufnahme des Eckenbereichs des zylindrischen ersten Ansatzes 3** dienenden Übergangsbereich (nicht bezeichnete Hinterschneidung) in der Umlenkfläche 4d. Eine sich im vorstehend erwähnten Übergangsbereich ausbildende kleine Wirbelströmung hat keine nachteiligen Auswirkungen auf die Strömungs- und Druckverhältnisse im Leckagehohlraum 5. Auf die in **Figur 4** dargestellte Hinterschneidung im vorstehend erwähnten Übergangsbereich kann ohne weiteres verzichtet werden, wenn am ersten Schließglied 3 eine geeignete Abrundung vorgenommen wird.

Gemäß den **Figuren 7, 1** nimmt das zweite Schließglied 4 nach Vollzug eines zweiten Teilhubes T2 seine zweite Sitzreinigungsstellung ein. Die zweite Dichtung 7 ist dabei unter Bildung eines Eintrittsspaltes aus der zweiten Sitzfläche 2b herausgetreten, und der zylindrische zweite Ansatz 4\*\* bildet zusammen mit der zweiten Sitzfläche 2b bzw. der ringförmigen Ausnehmung 2d den zweiten Drosselspalt D2, durch den die zweite Sitzreinigungsströmung R2 an die nunmehr überströmbare, freigelegte zweite Sitzfläche 2b herangeführt und in den Leckagehohlraum 5 eingeleitet werden kann. Die zweite Sitzfläche 2b ist zylindrisch ausgeführt, wobei sie unmittelbar durch die ringförmige Ausnehmung 2d gebildet ist. Diese Ausführungsform stellt in besonderer Weise sicher, dass das zweite Schließglied 4 in seiner Schließstellung mit der an der Stirnfläche seines zylindrischen zweiten Ansatzes 4\*\* angeordneten Anschlagfläche 4f allein an der Übergangsfläche 2e anliegt.

Die zweite Sitzreinigungsströmung R2 verlässt den zweiten Drosselspalt D2 (**Figuren 7, 2**) zunächst entlang der ringförmigen Ausnehmung 2d und wird über die Übergangsfläche 2e zum Zentrum des Leckagehohlraumes 5 hin umgelenkt. Ein unmittelbares und direktes Bespritzen des Sitzbereichs der ersten Dichtung 6 wird dadurch sicher verhindert. Das erste Schließglied 3 ist bei der Sitzreinigung des zweiten Schließgliedes 4 in axialer Richtung um den Sicherheitsabstand x von der Übergangsfläche 2e entfernt positioniert, sodass die zweite Sitzreinigungsströmung R2 unbehindert über das erste Schließglied 3 hinwegströmen kann. Durch diese Strömungsführung und Positionierung des ersten Schließgliedes 3 wird ein Besaugen des Sitzbereichs der ersten Dichtung 6 erreicht, sodass selbst bei Verlust oder signifikanter Beschädigung der ersten Dichtung 6 kein Reinigungsmittel in das benachbarte erste Ventilgehäuseteil 1 a eintreten kann. Die von der Übergangsfläche 2e und der ersten Sitzfläche 2a gebildete erste Umlaufkante U1, die mit der kleinstmöglichen Eckenabrundung r1 abgerundet ist, begünstigt ein Ablösen der Sitzreinigungsströmung R2 an der ersten Umlaufkante U1 und verhindert somit eine staudruckbildende Anströmung des zur ersten Dichtung 6 führenden Ringspaltes durch diese Sitzreinigungsströmung R2 oder durch einen Teilstrom derselben.

Die **Figur 7** zeigt weiterhin die Strömungsverhältnisse, die sich einstellen, wenn die zweite Sitzreinigungsströmung R2 bevorzugt im Bereich oberhalb des stirn- und radial innenseitigen Endes 4e der in den Eintritt der Ablaufbohrung 3d hineinragenden Umlenkfläche 4d auf letztere auftrifft. In diesem Falle erfährt die zweite Sitzreinigungsströmung R2 durch die Umlenkfläche 4d wenigstens eine in die Ablaufbohrung 3d gerichtete Umlenkung und, bei hinreichendem Abstand der Auftreffstelle von dem Ende 4e, zusätzlich eine zwangsweise Führung bis weit in den Eintritt der Ablaufbohrung 3d hinein. An der Auftreffstelle zweigt von der zweiten Sitzreinigungsströmung R2 ein nach oben in die Ausnehmung 4b gerichteter Teilstrom r ab, der dort eine entlang der Umlenkfläche 4d strömende Wirbelströmung W und, falls die Ausführungsform gemäß **Figur 4** gewählt wird, in der Hinterschneidung des Übergangsbereichs zwischen Umfangswand 4c und Umlenkfläche 4d eine gegenläufige weitere kleine Wirbelströmung ausbildet. Aus der Wirbelströmung W wird der in die zweite Sitzreinigungsströmung R2 rückgeführte Teilstrom r gespeist. Der Wirbelstrom W **(Figur 7)** oder beide Wirbelströme **(Figur 4)** sorgt bzw. sorgen für eine hinreichende Reinigung der die Ausnehmung 4b berandenden Flächen, ohne dass es zu einer Staudruckbildung an oder Direktanströmung der ersten Sitzfläche 2a kommt.

Der Drosselung der jeweiligen Sitzreinigungsströmung R1, R2 widmet die vorliegende Erfindung besondere Aufmerksamkeit. Der jeweilige Volumenstrom an Flüssigkeit der Sitzreinigungsströmung R1, R2 ist derart gedrosselt und/oder umgelenkt und geführt, dass der Druck an dem leckagehohlraumseitigen Abschnitt der Sitzfläche 2b, 2a des jeweils in seiner Schließstellung verbleibenden, anderen Schließgliedes 4, 3 gleich oder kleiner dem Umgebungsdruck bzw. dem Atmosphärendruck des Doppelsitzventils 1 ist. Es wird dabei angestrebt, dass die durch die Sitzreinigungsströmungen R1, R2 generierten Volumenströme an Flüssigkeit derart gedrosselt sind, dass die Volumenströme einander gleich sind. Darüber hinaus sind die Volumenströme durch die vorstehende Drosselung so bemessen, dass sie ohne Rückstau in der Ablaufbohrung 3d durch letztere in die Umgebung des Doppelsitzventils 1 ablaufen.

Sollte es dennoch zu einem Rückstau im minimalen Ablaufquerschnitt a der Ablaufbohrung 3d kommen, dann kann die Ablaufbohrung 3d im Bereich ihres Eintritts ein Speichervolumen mit einer Füllhöhe h ausbilden **(Figur 2)**, deren hydrostatischer Druck $\Delta p_{hydr}$ ($\Delta p_{hydr} = \rho\ g\ h$; Dichte $\rho$ der Reinigungsflüssigkeit; Erdbeschleunigung g) ausreicht, um den jeweiligen Volumenstrom an Flüssigkeit der Sitzreinigungsströmung R1, R2 mindestens durch den minimalen Ablaufquerschnitt a, der sich, in Schwerkraftrichtung gesehen, an die Füllhöhe h anschließt, hindurchzufördern. Das Speichervolumen mit der Füllhöhe h wird vorzugsweise durch den Innenraum des Einlauftrichters 3f gebildet.

Der erste Drosselspalt D1 **(Figur 6)** wird durch die radiale erste Spaltweite s1 und die erste Drosselspaltlänge l1 und der zweite Drosselspalt D2 **(Figur 7)** wird durch die radiale zweite Spaltweite s2 und die zweite Drosselspaltlänge 12 gebildet. Eine bevorzugte Auslegung der Drosselspalte D1, D2 sieht vor, dass die zweite radiale Spaltweite s2 des zweiten Drosselspaltes D2 kleiner als die radiale erste Spaltweite s1 des ersten Drosselspaltes D1 ausgeführt ist. Es hat sich eine diesbezügliche quantitative Bemessungsvorschrift als vorteilhaft bewährt, nach der sich die nachstehend definierten relativen radialen Spaltweiten der Drosselspalte D1, D2 annähernd wie 2 : 1 verhalten. Es gilt in diesem Zusammenhang für die relative radiale Spaltweite des ersten Drosselspaltes D1 **(Figur 6)** nach Gleichung (1)

$$s1/[(d_{1i} + d_{1a})/2] \qquad (1)$$

und für die relative radiale Spaltweite des zweiten Drosselspaltes D2 **(Figur 7)** nach Gleichung (2)

$$s2/[(d_{2i} + d_{2a})/2], \qquad (2)$$

wobei die Drosselspalte D1, D2 bevorzugt nach Gleichung (3) mit

$$\frac{\dfrac{s1}{\dfrac{d_{1i} + d_{1a}}{2}}}{\dfrac{s2}{\dfrac{d_{2i} + d_{2a}}{2}}} \approx \frac{2}{1} \qquad (3)$$

ausgelegt werden.

Die jeweilige Drosselwirkung der ringförmigen Drosselspalte D1, D2 wird neben ihrer radialen Spaltweite s1, s2, die sich jeweils exponentiell auswirkt, von der zugeordneten Länge l1, l2, die jeweils linearen Einfluss nimmt, bestimmt. Diese Bestimmungsgrößen lassen sich unter den vorg. Bedingungen vorzugsweise so auslegen und aufeinander abstimmen, dass die in den jeweiligen Sitzreinigungsstellungen mit den Teilhüben T1, T2 durch die zugeordneten Sitzreinigungsströmungen R1, R2 generierten Volumenströme an Flüssigkeit gleich sind.

<u>BEZUGSZEICHENLISTE DER VERWENDETEN ABKÜRZUNGEN</u>

| | |
|---|---|
| 1 | Doppelsitzventil |
| 10 | Ventilgehäuse |
| 1a | erstes Ventilgehäuseteil |
| 1b | zweites Ventilgehäuseteil |
| | |
| 2 | Sitzring |
| 2a | erste Sitzfläche (zylindrische Sitzfläche) |
| 2b | zweite Sitzfläche (axial; radial; axial/radial) |
| 2c | Verbindungsöffnung |
| 2d | ringförmige Ausnehmung |
| 2e | Übergangsfläche |
| | |
| 3 | erstes Schließglied (Schieberkolben) |
| 3* | erster Endabschnitt |
| 3** | zylindrischer erster Ansatz |
| 3a | erste Verstellstange |
| 3b | Verbindungsteil |
| 3c | erster Druckausgleichskolben |
| 3d | Ablaufbohrung |
| 3f | (konusförmiger) Einlauftrichter |
| 3e | Traverse |
| 3g | Ring |
| 3h | querschnittsreduzierter Ventilstangenbereich |
| | |
| 4 | zweites Schließglied |
| 4* | zweiter Endabschnitt |
| 4** | zylindrischer zweiter Ansatz |
| 4a | zweite Verstellstange |

4b     Ausnehmung
4c     Umfangswand
4d     Umlenkfläche
4e     stirn- und radial innenseitiges Ende (des zweiten Schließgliedes 4)
4f     Anschlagfläche (schließgliedseitig)
4g     zweite Druckausgleichskolben

5     Leckagehohlraum

6     erste Dichtung (radial)
7     zweite Dichtung (axial; radial; axial/radial)
8     Mitteldichtung (im zweiten Schließglied 4)
8*     Mitteldichtung (im ersten Schließglied 3)

a     minimaler Ablaufquerschnitt

$d_{1a}$     erster Sitzdurchmesser
$d_{1i}$     erster Schließglieddurchmesser
$d_{2a}$     zweiter Sitzdurchmesser
$d_{2i}$     zweiter Schließglieddurchmesser

h     Füllhöhe

I     Länge (des minimalen Ablaufquerschnitts a)
I1     erste Drosselspaltlänge
I2     zweite Drosselspaltlänge

$\Delta p_{hydr}$     hydrostatischer Druck ($\Delta p_{hydr} = \rho\, g\, h$; Dichte $\rho$ der Reinigungsflüssigkeit; Erdbeschleunigung g)
r     Teilstrom (aus zweiter Sitzreinigungsströmung R2)

$\Delta r$     radialer Erstreckungsbereich ($\Delta r = d_{2a} - d_{1a}$)

r1     erste Eckenabrundung (gehäuseseitig; Sitzring 2)
r2     zweite Eckenabrundung (zweites Schließglied 4)
s1     radiale erste Spaltweite (erster Drosselspalt D1)
s2     radiale zweite Spaltweite (zweiter Drosselspalt D2)

x     axialer Sicherheitsabstand

$\alpha$     Umlenkwinkel

$A_0$     Nenndurchtrittsquerschnitt
$A_R$     Ringraum-Durchtrittsquerschnitt

D1     erster Drosselspalt
D2     zweiter Drosselspalt

E     Ebene (als geometrischer Ort der Anschlagfläche 4f)
H     voller Öffnungshub (volle Offenstellung)
K     Kontur der Umlenkfläche 4b

R1     erste Sitzreinigungsströmung
R2     zweite Sitzreinigungsströmung

T1     erster Teilhub (erste Teiloffenstellung/erste Sitzreinigungsstellung)
T2     zweiter Teilhub (zweite Teiloffenstellung/zweite Sitzreinigungsstellung)

U1     erste Umlaufkante

U2    zweite Umlaufkante
W     Wirbelströmung

**Patentansprüche**

1.  Doppelsitzventil,

    • das zwei seriell angeordnete, relativ zueinander bewegbare Schließglieder (3, 4) aufweist, die in der Schließstellung des Doppelsitzventils (1) das Überströmen von Fluiden von einem Ventilgehäuseteil (1a; 1b) eines Ventilgehäuses (10) in ein anderes (1b; 1a) verhindern, die sowohl in der Schließ- als auch in der Offenstellung einen Leckagehohlraum (5) zwischen sich begrenzen, der mit der Umgebung des Doppelsitzventils (1) über eine Ablaufbohrung (3d), die von einem an dem ersten Schließglied (3) ausgebildeten, aus dem Ventilgehäuse (10) herausgeführten Rohrschaft berandet ist, verbunden ist,

    • wobei in der Schließstellung das als Schieberkolben ausgebildete erste Schließglied (3) in einer die Ventilgehäuseteile (1a, 1b) miteinander verbindenden, eine zylindrische erste Sitzfläche (2a) ausbildenden Verbindungsöffnung (2c) dichtend Aufnahme findet und im Zuge seiner Öffnungsbewegung an einem oder in einem zweiten Schließglied (4), das einer zweiten Sitzfläche (2b) zugeordnet ist, dichtend zur Anlage kommt und letzteres bei der weiteren Öffnungsbewegung gleichfalls in eine Offenstellung (H) überführt wird,

    • wobei die Schließglieder (3, 4) unabhängig voneinander durch einen Teilhub (T1, T2) jeweils spaltweit in eine Sitzreinigungsstellung zwecks Spülung ihrer Sitzflächen (2a, 2b) überführbar sind,

    • wobei das zweite Schließglied (4) durch einen der Öffnungsbewegung gleichgerichteten zweiten Teilhub (T2) und das erste Schließglied (3) durch einen der Öffnungsbewegung entgegengerichteten ersten Teilhub (T1) in seine jeweilige Sitzreinigungsstellung überführbar sind,

    • wobei das erste Schließglied (3) an seinem ersten Endabschnitt (3*) eine erste Dichtung (6) aufweist, die radial gegenüber der zylindrischen ersten Sitzfläche (2a) abdichtet,

    • wobei das zweite Schließglied (4) an seinem dem ersten Schließglied (3) zugewandten zweiten Endabschnitt (4*) eine rotationssymmetrische Ausnehmung (4b) besitzt, die sich in der Schließstellung des Doppelsitzventils (1) radial außenseitig durchmesserbündig an die zylindrische erste Sitzfläche (2a) anschließt,

    • wobei die Ausnehmung (4b) in einem radial außenseitigen Teil wenigstens abschnittsweise von einer Umlenkfläche (4d) begrenzt ist, deren Kontur (K), im Meridianschnitt gesehen, einen knickfreien Verlauf aufweist,

    • wobei das radial außenseitige Ende der Umlenkfläche (4d) unmittelbar oder mittelbar in der stirnseitigen Begrenzungsfläche des zweiten Endabschnitts (4*) ausmündet,

    • wobei jeder Endabschnitt (3*, 4*) in der zugeordneten Sitzreinigungsstellung radial außenseitig mit der zugeordneten Verbindungsöffnung (2c) einen ringförmigen Drosselspalt (D1, D2) bildet,

    • wobei die erste Sitzfläche (2a) einen Durchmesser aufweist, der kleiner ist als der Durchmesser einer dem zweiten Schließglied (4) zugeordneten ringförmigen Ausnehmung (2d) in der Verbindungsöffnung (2c), und mit einer Übergangsfläche (2e) zwischen der ersten Sitzfläche (2a) und der ringförmigen Ausnehmung (2d),

    • wobei das zweite Schließglied (4) in seiner Schließstellung mit einer an einer Stirnfläche seines zweiten Endabschnitts (4*) angeordneten Anschlagfläche (4f) an der Übergangsfläche (2e) anliegt, und zwar unmittelbar an die erste Sitzfläche (2a) angrenzend,

    **dadurch gekennzeichnet,**
    **dass** die Umlenkfläche (4d) mit einem ihrem radial außenseitigen Ende abgewandten Erstreckungsbereich den restlichen Bereich der Ausnehmung (4b) in Gänze berandet und an einem dem ersten Schließglied (3) zugewandten stirn- und radial innenseitigen Ende (4e) des zweiten Schließgliedes (4) derart aus letzterem ausmündet, dass das stirn- und radial innenseitige Ende (4e) des zweiten Schließgliedes (4), in der Längsachse des Doppelsitzventils (1) gesehen, über einen gedachten Raum, der durch eine durch die Anschlagfläche (4f) hindurchgehende Ebene (E) stirnseitig begrenzt ist, hinausragt,

    und **dass** das erste Schließglied (3) im Zuge seiner Öffnungsbewegung am zweiten Schließglied (4) über eine zwischen den Schließgliedern (3, 4) wirkende Mitteldichtung (8, 8*) dichtend zur Anlage kommt.

2.  Doppelsitzventil nach einem der Ansprüche 1,
    **dadurch gekennzeichnet,**
    **dass** die zweite Sitzfläche (2b) zylindrisch ausgeführt und durch die ringförmige Ausnehmung (2d) gebildet ist, und dass das zweite Schließglied (4) eine zweite Dichtung (7) aufweist, die radial gegenüber der zweiten Sitzfläche (2b) im Gleiteingriff abdichtet.

**3.** Doppelsitzventil nach einem der Ansprüche 1,
**dadurch gekennzeichnet,**
**dass** die zweite Sitzfläche (2b) kegelförmig ausgeführt und durch die Übergangsfläche (2e) oder durch eine sich gegenüber der Übergangsfläche (2e) andererseits an die ringförmige Ausnehmung (2d) anschließende Fläche gebildet ist, und dass das zweite Schließglied (4) eine zweite Dichtung (7) aufweist, die axial/radial gegenüber der zweiten Sitzfläche (2b) im Gleit-/Druckeingriff abdichtet.

**4.** Doppelsitzventil nach einem der Ansprüche 1,
**dadurch gekennzeichnet,**
**dass** die zweite Sitzfläche (2b) senkrecht zur Längsachse des Doppelsitzventils (1) angeordnet und durch die Übergangsfläche (2e) oder durch eine sich gegenüber der Übergangsfläche (2e) andererseits an die ringförmige Ausnehmung (2d) anschließende Fläche gebildet ist, und dass das zweite Schließglied (4) eine zweite Dichtung (7) aufweist, die axial gegenüber der zweiten Sitzfläche (2b) im Druckeingriff abdichtet.

**5.** Doppelsitzventil nach einem der vorhergehenden Ansprüche,
**dadurch gekennzeichnet,**
**dass** die Ventilgehäuseteile (1a, 1b) entsprechend dem größten Nenndurchtrittsquerschnitt ($A_o$) einer an letztere anschließbaren Rohrleitung ausgeführt und über einen die Verbindungsöffnung (2c) innenseits ausbildenden Sitzring (2) miteinander verbunden sind, dass ein Verbindungsteil (3b) des Rohrschaftes, das einen Abschnitt der Ablaufbohrung (3d) innenseitig ausbildet, beim vollen Öffnungshub (H) des Doppelsitzventils (1) mindestens die Verbindungsöffnung (2c) durchdringt und dort radial außenseitig derart bemessen ist, dass die Verbindungsöffnung (2c) an ihrer engsten Stelle einen Ringraum mit einem Ringraum-Durchtrittsquerschnitt ($A_R$) ausbildet, der mindestens dem Nenndurchtrittsquerschnitt ($A_o$) entspricht ($A_R \geq A_o$)

**6.** Doppelsitzventil nach Anspruch 5,
**dadurch gekennzeichnet,**
**dass** sich die Ablaufbohrung (3d) vom leckagehohlraumseitigen Ende des ersten Schließgliedes (3) in einem Einlauftrichter (3f) konusförmig und stetig bis zum Verbindungsteil (3b) verjüngt und in letzterem auf einer begrenzten Länge (I) einen minimalen Ablaufquerschnitt (a) aufweist.

**7.** Doppelsitzventil nach Anspruch 5 oder 6,
**dadurch gekennzeichnet,**
**dass** sich die Ablaufbohrung (3d) im Anschluss an den Verbindungsteil (3b) in einem als erster Druckausgleichskolben (3c) ausgebildeten Abschnitt des Rohrschaftes erweitert, wobei der Druckausgleichskolben (3c) einen der ersten Sitzfläche (2a) entsprechenden Außendurchmesser aufweist.

**8.** Doppelsitzventil nach Anspruch 6 oder 7,
**dadurch gekennzeichnet,**
**dass** der Einlauftrichter (3f) mit einem sich in ihm aufstauenden Volumen an Flüssigkeit eine Füllhöhe (h) ausbildet, deren hydrostatischer Druck ($\Delta p_{hydr}$) ausreicht, um den in der jeweiligen Sitzreinigungsstellung generierten Volumenstrom an Flüssigkeit mindestens durch den minimalen Ablaufquerschnitt (a) des Verbindungsteils (3b), das sich, in Schwerkraftrichtung gesehen, an die Füllhöhe (h) anschließt, hindurchzufördern.

**9.** Doppelsitzventil nach einem der vorhergehenden Ansprüche,
**dadurch gekennzeichnet,**
**dass** eine radiale zweite Spaltweite (s2) des zweiten Drosselspaltes (D2) kleiner als eine radiale erste Spaltweite (s1) des ersten Drosselspaltes (D1) ausgeführt ist.

**10.** Doppelsitzventil nach Anspruch 9,
**dadurch gekennzeichnet,**
**dass** die ringförmigen Drosselspalte (D1, D2) mit ihrer radialen Spaltweite (s1, s2) und einer zugeordneten Länge (l1, l2) so ausgelegt sind, dass die in den jeweiligen Sitzreinigungsstellungen mit den Teilhüben (T1, T2) durch die zugeordneten Sitzreinigungsströmungen (R1, R2) generierten Volumenströme an Flüssigkeit gleich sind.

**11.** Doppelsitzventil nach einem der vorhergehenden Ansprüche,
**dadurch gekennzeichnet,**
**dass** die ringförmige Ausnehmung (2d) mit der Übergangsfläche (2e) einen senkrechten Umlenkwinkel ($\alpha$) bildet ($\alpha$ = 90 Grad).

12. Doppelsitzventil nach einem der vorhergehenden Ansprüche,
**dadurch gekennzeichnet,**
**dass** die Kontur (K) aus einer Abfolge gekrümmter Abschnitte besteht, die an ihren Übergangsstellen jeweils eine gemeinsame Tangente besitzen.

13. Doppelsitzventil nach einem der Ansprüche 5 bis 12,
**dadurch gekennzeichnet,**
**dass** eine mit dem ersten Schließglied (3) verbundene erste Verstellstange (3a) wenigstens im axialen Erstreckungsbereich des Verbindungsteils (3b) in ihrem Querschnitt reduziert ist, und zwar auf einen querschnittsreduzierten Ventilstangenbereich (3h).

14. Doppelsitzventil nach einem der vorhergehenden Ansprüche,
**dadurch gekennzeichnet,**
**dass** ein zylindrischer erster Ansatz (3\*\*) am ersten Endabschnitt (3\*) und ein zylindrischer zweiter Ansatz (4\*\*) am zweiten Endabschnitt (4\*) jeweils auf seiner den zugeordneten Drosselspalt (D1, D2) begrenzenden Umfangsfläche in Form einer Labyrinthdichtung ausgebildet ist.

15. Doppelsitzventil nach Anspruch 14,
**dadurch gekennzeichnet,**
**dass** die Labyrinthdichtung in Form einer Anzahl umlaufender Nuten ausgeführt ist.

16. Doppelsitzventil nach Anspruch 14,
**dadurch gekennzeichnet,**
**dass** die Labyrinthdichtung in Form einer Anzahl über die Umfangsfläche des zylindrischen Ansatzes (3\*\*, 4\*\*) verteilter, am jeweiligen Ort ihrer Ausbildung flächenmäßig begrenzter, nicht miteinander verbundener Ausnehmungen ausgeführt ist.

**Claims**

1. A double-seat valve,

   • which has two closing members (3, 4) that are arranged in a serial manner and moveable relative to each other, which prevent in the closed position of the double-seat valve (1) the overflowing of fluids from one valve housing part (1a; 1b) of a valve housing (10) into another (1b; 1a), which delimit amongst themselves a leakage hollow space (5) both in the closed as well as in the open position, which is connected with the surroundings of the double-seat valve (1) via a discharge bore hole (3d), which is bordered by a tube shaft formed on the first closing member (3) and guided out of the valve housing (10),
   • wherein in the closed position the first closing member (3) designed as a pusher piston is accommodated in a sealing manner in a connection opening (2c) interconnecting the valve housing parts (1a, 1b) and forming a first cylindrical seat (2a) and comes to rest during its opening movement in a sealing manner on or in a second closing member (4) which is assigned to a second seat (2b), and the latter is likewise transferred into an open position (H) during the rest of the opening movement,
   • wherein the closing members (3, 4) are transferable independently of each other through a partial stroke (T1, T2) respectively at a gap's width into a seat-cleaning position for the purpose of rinsing their seats (2a, 2b),
   • wherein the second closing member (4) is transferable into its respective seat-cleaning position through a second partial stroke (T2) that acts in the same direction as the opening movement and the first closing member (3) through a first partial stroke (T1) that acts in an opposite direction to the opening movement,
   • wherein the first closing member (3) has a first seal (6), which seals off radially with respect to the cylindrical first seat (2a), on its first end section (3\*),
   • wherein the second closing member (4) has, on its second end section (4\*) facing the first closing member (3), a rotationally symmetrical recess (4b), which connects in the closed position of the double-seat valve (1) to the cylindrical first seat (2a) on the radial outside and flush with the diameter,
   • wherein the recess (4b) in a radial outside part is delimited at least in sections by a deflection surface (4d), the contour (K) of which, as seen in a meridional section, has a bend-free progression,
   • wherein the radial outside end of the deflection surface (4d) opens up directly or indirectly in the front-side boundary surface of the second end section (4\*),
   • wherein each end section (3\*, 4\*) in the associated seat-cleaning position forms an annular throttle gap (D1, D2) on the radial outside with the associated connection opening (2c),

• wherein the first seat (2a) has a diameter, which is less than the diameter of an annular recess (2d) associated with the second closing member (4) in the connection opening (2c), and with a transition surface (2e) between the first seat (2a) and the annular recess (2d),

• wherein the second closing member (4) in its closed position with a stop surface (4f) arranged on a front surface of its second end section (4*) abuts against the transition surface (2e), and namely directly adjacent to the first seat (2a),

**characterized in that**

the deflection surface (4d) with an extension area facing away from its radial outside end borders the remaining area of the recess (4b) in its entirety and, on an end (4e) of the second closing member (4) on the front and radial inside and facing the first closing member (3), runs out of the latter such that the front and radial inside end (4e) of the second closing member (4), as seen in the longitudinal axis of the double-seat valve (1), protrudes beyond an imaginary space, which is delimited on the front side by a plane (E) passing through the stop surface (4f),

and **in that** the first closing member (3) comes to rest in the course of its opening movement in a sealing manner on the second closing member (4) via a middle seal (8, 8*) acting between the closing members (3, 4).

2. The double-seat valve according to one of the claims 1,
   **characterized in that**
   the second seat (2b) is designed cylindrically and is formed by the annular recess (2d) and **in that** the second closing member (4) has a second seal (7), which seals off radially with respect to the second seat (2b) in sliding engagement.

3. The double-seat valve according to one of the claims 1,
   **characterized in that**
   the second seat (2b) is designed conically and is formed by the transition surface (2e) or by a surface connecting to the annular recess (2d) on the other side with respect to the transition surface (2e) and **in that** the second closing member (4) has a second seal (7), which seals off axially/radially with respect to the second seat (2b) in sliding/pressing engagement.

4. The double-seat valve according to one of the claims 1,
   **characterized in that**
   the second seat (2b) is arranged perpendicular to the longitudinal axis of the double-seat valve (1) and is formed by the transition surface (2e) or by a surface connecting to the annular recess (2d) on the other side with respect to the transition surface (2e) and **in that** the second closing member (4) has a second seal (7), which seals off axially with respect to the second seat (2d) in pressing engagement.

5. The double-seat valve according to any one of the preceding claims,
   **characterized in that**
   the valve housing parts (1a, 1b) are designed according to the greatest nominal passage cross-section ($A_O$) of a pipeline that can be connected to the latter and are interconnected via a seat ring (2) forming the connection opening (2c) on the inside, **in that** a connection part (3b) of the tube shaft, which forms a section of the discharge bore hole (3d) on the inside, penetrates at least the connection opening (2c) during the full opening stroke (H) of the double-seat valve (1) and is measured there on the radial outside such that the connection opening (2c) at its narrowest point forms an annular space with an annular space passage cross-section ($A_R$), which corresponds at least with the nominal passage cross-section ($A_O$) ($A_R \geq A_O$).

6. The double-seat valve according to claim 5,
   **characterized in that**
   the discharge bore hole (3d) tapers from the leakage-hollow-space-side end of the first closing member (3) in a feed hopper (3f) conically and continuously up to the connection part (3b) and has a minimal discharge cross-section (a) in the latter over a limited length (1).

7. The double-seat valve according to claim 5 or 6,
   **characterized in that**
   the discharge bore hole (3d) in the connection to the connection part (3b) expands in a section of the tube shaft designed as a first pressure compensation piston (3c), wherein the pressure compensation piston (3c) has an outer diameter corresponding with the first seat (2a).

8. The double-seat valve according to claim 6 or 7,
   **characterized in that**
   the feed hopper (3f) with a volume of liquid accumulating in it forms a fill level (h), the hydrostatic pressure ($\Delta p_{hydr}$) of which suffices in order to convey the volume flow of liquid generated in the respective seat-cleaning position at least through the minimum discharge cross-section (a) of the connection part (3b), which, as seen in the gravitational direction, connects to the fill level (h).

9. The double-seat valve according to any one of the preceding claims,
   **characterized in that**
   a radial second gap width (s2) of the second throttle gap (D2) is designed smaller than a radial first gap width (s1) of the first throttle gap (D1).

10. The double-seat valve according to claim 9,
    **characterized in that**
    the annular throttle gaps (D1, D2) with their radial gap width (s1, s2) and an associated length (11,12) are designed such that the volume flows of liquid generated in the respective seat-cleaning positions with the partial strokes (T1, T2) through the associated seat-cleaning flows (R1, R2) are the same.

11. The double-seat valve according to any one of the preceding claims,
    **characterized in that**
    the annular recess (2d) with the transition surface (2e) forms a perpendicular deflection angle ($\alpha$) ($\alpha$ = 90 degrees).

12. The double-seat valve according to any one of the preceding claims,
    **characterized in that**
    the contour (K) consists of a sequence of bent sections, each of which has a common tangent at their transition points.

13. The double-seat valve according to one of claims 5 to 12,
    **characterized in that**
    a first adjustment rod (3a) connected with the first closing member (3) is reduced in its cross-section at least in the axial extension area of the connection part (3b), and namely to a cross-section-reduced valve rod area (3h).

14. The double-seat valve according to any one of the preceding claims,
    **characterized in that**
    a cylindrical first appendage (3**) on the first end section (3*) and a cylindrical second appendage (4**) on the second end section (4*) are designed in the form of a labyrinth seal respectively on its peripheral surface bordering the associated throttle gap (D1, D2).

15. The double-seat valve according to claim 14,
    **characterized in that**
    the labyrinth seal is designed in the form of a number of circumferential grooves.

16. The double-seat valve according to claim 14,
    **characterized in that**
    the labyrinth seal is designed in the form of a number of recesses that are not interconnected, that are delimited in terms of surface area at the respective location of their formation and that are distributed over the peripheral surface of the cylindrical appendage (3**, 4**).

**Revendications**

1. Soupape à double siège

   • présentant deux organes de fermeture (3, 4) déplaçables l'un par rapport à l'autre et agencés en série, lesquels empêchent l'écoulement de fluides d'une partie de boîtier de soupape (1a ; 1b) d'un boîtier de soupape (10) vers une autre (1b ; 1a) dans la position de fermeture de la soupape à double siège (1), celles-ci délimitant entre elles un espace creux de fuite (5) aussi bien dans la position de fermeture que dans la position d'ouverture, lequel est relié à l'environnement de la soupape à double siège (1) par le biais d'un alésage d'évacuation (3d) bordé par un corps de conduite formé sur le premier organe de fermeture (3) et faisant saillie hors du boîtier de soupape (10),

• dans laquelle, dans la position de fermeture, le premier organe de fermeture (3) formé comme un piston-tiroir est logé de façon étanche dans une ouverture de liaison (2c) formant une première surface de siège cylindrique (2a) et reliant entre elles les parties de boîtier de soupape (1a; 1 b) et s'applique de façon étanche sur ou dans un deuxième organe de fermeture (4) attribué à une deuxième surface de siège (2b) au cours de son mouvement d'ouverture, ce dernier étant également transféré dans une position d'ouverture (H) au cours d'un mouvement d'ouverture supplémentaire,

• dans laquelle les organes de fermeture (3, 4) peuvent être transférés indépendamment l'un de l'autre respectivement sur une largeur de fente par une course partielle (T1, T2) dans une position de nettoyage de siège en vue du rinçage de leurs surfaces de siège (2a, 2b),

• dans laquelle le deuxième organe de fermeture (4), par une deuxième course partielle (T2) dans la direction du mouvement d'ouverture, et le premier organe de fermeture (3), par une première course partielle (T1) dans la direction opposée au mouvement d'ouverture, peuvent être transférés dans leur position de nettoyage de siège respective,

• dans laquelle le premier organe de fermeture (3) présente un premier joint d'étanchéité (6) au niveau de sa première section finale (3*), lequel assure l'étanchéité radialement par rapport à la première surface de siège cylindrique (2a),

• dans laquelle le deuxième organe de fermeture (4) présente un évidement (4b) symétrique en rotation au niveau de sa deuxième section finale (4*) tournée vers le premier organe de fermeture (3), lequel se raccorde radialement du côté extérieur à fleur de diamètre à la première surface de siège cylindrique (2a) dans la position de fermeture de la soupape à double siège (1),

• dans laquelle l'évidement (4b) est délimité au moins par tronçons dans une partie radialement extérieure par une surface de déviation (4d) dont le contour (K) présente un tracé sans coude, vu dans une section méridienne,

• dans laquelle l'extrémité radialement extérieure de la surface de déviation (4d) débouche directement ou indirectement sur la surface de délimitation frontale de la deuxième section finale (4*),

• dans laquelle chaque section finale (3*, 4*) forme une fente d'étranglement annulaire (D1, D2) radialement du côté extérieur avec l'ouverture de liaison (2c) correspondante dans la position de nettoyage de siège correspondante,

• dans laquelle la première surface de siège (2a) présente un diamètre inférieur au diamètre d'un évidement annulaire (2d) attribué au deuxième organe de fermeture (4) dans l'ouverture de liaison (2c), et avec une surface de transition (2e) entre la première surface de siège (2a) et l'évidement annulaire (2d),

• dans laquelle, dans sa position de fermeture, le deuxième organe de fermeture (4) s'applique avec une surface de butée (4f) agencée sur une surface frontale de sa deuxième section finale (4*) contre la surface de transition (2e), et notamment en se raccordant directement à la première surface de siège (2a),

**caractérisée en ce que**

la surface de déviation (4d), avec une région d'extension opposée à son extrémité radialement extérieure, borde entièrement la région restante de l'évidement (4b) et débouche de telle façon hors d'une extrémité radialement intérieure côté frontal (4e) du deuxième organe de fermeture (4) tournée vers le premier organe de fermeture (3), que l'extrémité radialement intérieure côté frontal (4e) du deuxième organe de fermeture (4), vue dans la direction de l'axe longitudinal de la soupape à double siège (1), fait saillie au-delà d'un espace imaginaire délimité côté frontal par un plan (E) traversant la surface de butée (4f),

et **en ce que** le premier organe de fermeture (3) vient s'appliquer de façon étanche sur le deuxième organe de fermeture (4) au cours de son mouvement d'ouverture, par le biais d'un joint d'étanchéité central (8, 8*) agissant entre les organes de fermeture (3, 4).

2. Soupape à double siège selon l'une des revendications 1,
**caractérisée en ce que**
la deuxième surface de siège (2b) est conçue de façon cylindrique et formée par l'évidement annulaire (2b), et **en ce que** le deuxième organe de fermeture (4) présente un deuxième joint d'étanchéité (7) assurant l'étanchéité radialement par rapport à la deuxième surface de siège (2b) en contact glissant.

3. Soupape à double siège selon l'une des revendications 1,
**caractérisée en ce que**
la deuxième surface de siège (2b) est conçue de façon conique et formée par la surface de transition (2e) ou par une surface se raccordant autrement à l'évidement annulaire (2d) par rapport à la surface de transition (2e), et **en ce que** le deuxième organe de fermeture (4) présente un deuxième joint d'étanchéité (7) assurant l'étanchéité axialement/radialement par rapport à la deuxième surface de siège (2b) en contact glissant/par pression.

4. Soupape à double siège selon l'une des revendications 1,
**caractérisée en ce que**
la deuxième surface de siège (2b) est agencée perpendiculairement à l'axe longitudinal de la soupape à double siège (1) et formée par la surface de transition (2e) ou par une surface se raccordant autrement à l'évidement annulaire (2d) par rapport à la surface de transition (2e), et **en ce que** le deuxième organe de fermeture (4) présente un deuxième joint d'étanchéité (7) assurant l'étanchéité axialement par rapport à la deuxième surface de siège (2b) en contact par pression.

5. Soupape à double siège selon l'une des revendications précédentes,
**caractérisée en ce que**
les parties de boîtier de soupape (1a; 1b) sont conçues de manière à correspondre à la plus grande section transversale de passage nominale ($A_O$) d'une conduite susceptible d'être raccordée à celles-ci, et sont reliées entre elles par le biais d'une bague de siège (2) formant l'ouverture de liaison (2c) du côté intérieur, **en ce qu'**une pièce de liaison (3b) du corps de conduite formant une section de l'alésage d'évacuation (3d) du côté intérieur traverse au moins l'ouverture de liaison (2c) lors de la course d'ouverture (H) complète de la soupape à double siège (1), où elle est dimensionnée de telle manière radialement du côté extérieur que l'ouverture de liaison (2c) forme, dans sa région la plus étroite, un espace annulaire avec une section transversale de passage d'espace annulaire ($A_R$) correspondant au moins à la section transversale de passage nominale ($A_O$) ($A_R \geq A_O$).

6. Soupape à double siège selon la revendication 5,
**caractérisée en ce que**
l'alésage d'évacuation (3d) s'affine de façon conique en un entonnoir d'admission (3f) à partir de l'extrémité côté espace creux de fuite du premier organe de fermeture (3) et continuellement jusqu'à la pièce de liaison (3b), où il présente une section transversale d'évacuation minimale (a) sur une longueur limitée (I).

7. Soupape à double siège selon la revendication 5 ou 6,
**caractérisée en ce que**
l'alésage d'évacuation (3d) s'élargit à la suite de la pièce de liaison (3b) en une section du corps de conduite formée comme un premier piston de compensation de pression (3c), le piston de compensation de pression (3c) présentant un diamètre extérieur correspondant à la première surface de siège (2a).

8. Soupape à double siège selon la revendication 6 ou 7,
**caractérisée en ce que**
l'entonnoir d'admission (3f) forme un niveau de remplissage (h) avec un volume de liquide accumulé dans celui-ci, dont la pression hydrostatique ($\Delta p_{hydr}$) suffit pour guider le flux volumique de liquide généré dans la position de nettoyage de siège respective au moins à travers la section transversale d'évacuation minimale (a) de la pièce de liaison (3b), laquelle se raccorde au niveau de remplissage (h), vue dans la direction de la force de gravité.

9. Soupape à double siège selon l'une des revendications précédentes,
**caractérisée en ce que**
une deuxième largeur de fente radiale (s2) de la deuxième fente d'étranglement (D2) est conçue inférieure à une première largeur de fente radiale (s1) de la première fente d'étranglement (D1).

10. Soupape à double siège selon la revendication 9,
**caractérisée en ce que**
les fentes d'étranglement annulaires (D1, D2) sont conçues de telle façon avec leur largeur de fente radiale (s1, s2) et une longueur correspondante (l1, l2), que les flux volumiques de liquide générés par les flux de nettoyage de siège (R1, R2) correspondants avec les courses partielles (T1, T2) dans les positions de nettoyage de siège respectives sont égaux.

11. Soupape à double siège selon l'une des revendications précédentes,
**caractérisée en ce que**
l'évidement annulaire (2d) forme un angle de déviation ($\alpha$) perpendiculaire avec la surface de transition (2e) ($\alpha$ = 90 degrés).

12. Soupape à double siège selon l'une des revendications précédentes,
**caractérisée en ce que**
le contour (K) est constitué d'une suite de sections courbes présentant respectivement une tangente commune au niveau de leurs régions de transition.

**13.** Soupape à double siège selon l'une des revendications 5 à 12,
**caractérisée en ce que**
une première tige de réglage (3a) reliée au premier organe de fermeture (3) est réduite quant à sa section transversale au moins dans la région d'extension axiale de la pièce de liaison (3b), et notamment en une région de tige de soupape (3h) à section transversale réduite.

**14.** Soupape à double siège selon l'une des revendications précédentes,
**caractérisée en ce que**
un premier appendice cylindrique (3**) est formé sur la première section finale (3*) et un deuxième appendice cylindrique (4**) est formé sur la deuxième section finale (4*), sous la forme d'un joint d'étanchéité labyrinthe, respectivement sur sa surface circonférentielle délimitant la fente d'étranglement (D1, D2) correspondante.

**15.** Soupape à double siège selon la revendication 14,
**caractérisée en ce que**
le joint d'étanchéité labyrinthe est conçu sous la forme d'un nombre de rainures périphériques.

**16.** Soupape à double siège selon la revendication 14,
**caractérisée en ce que**
le joint d'étanchéité labyrinthe est conçu sous la forme d'un nombre d'évidements répartis sur la surface circonférentielle de l'appendice cylindrique (3**, 4**), non reliés entre eux et limités en termes de surface à l'endroit respectif où ils sont formés.

**Figur 1**

**Figur 1a**          **Figur 1b**

EP 2 861 898 B1

"X"

**Fig. 1c**

**Fig. 1d**

"Y"

**Fig. 1h**

**Fig. 1e**

**Fig. 1i**

**Fig. 1f**

**Fig. 1j**

**Fig. 1g**

**Fig. 1k**

**Figur 2**

7   4*   2b; 2e   8   2c   4   4a   3a

2d

D2

4**

E

4f

3**

D1

2

Δr   2a   3*   3

4d   K   5   4d   4e   3d

1

**Figur 3**

**Figur 4**

**Figur 5**

**Figur 6**

**Figur 7**

**IN DER BESCHREIBUNG AUFGEFÜHRTE DOKUMENTE**

**In der Beschreibung aufgeführte Patentdokumente**

- WO 2007054131 A1
- WO 2007054134 A1
- US 20090008594 A1
- US 2009044874 A1
- US 20090044874 A1

- DE 102007038124 A1
- US 20090065077 A1
- WO 9841786 A1
- US 6178986 B1
- DE 102010046137 A1
- US 2009065077 A1

**In der Beschreibung aufgeführte Nicht-Patentliteratur**

- *3-A Sanitary Standards for Double-Seat Mixproof Valves, Number 85-02 [1]*

- *Pentair Südmo Operating Instructions, BAA D 365it Complete PMO, Version 1.01, Double-seat valve type D 365it Complete PMO type D620 [2],* November 2011, http://www.suedmo.de/resources/images/790